# EUROPEAN PATENT APPLICATION

(11) **EP 4 529 039 A1**
(43) Date of publication of application: **26.03.2025**
(21) Application number: 23823204.5
(22) Date of filing: 14.06.2023
(51) Int. Cl.: H04B 7/10

(54) **INFORMATION TRANSMISSION METHOD AND APPARATUS**

(30) Priority: 15.06.2022 CN 202210682248; 02.11.2022 CN 202211364651
(71) Applicant: Huawei Technologies Co., Ltd., Shenzhen, Guangdong 518129 (CN)
(72) Inventor: DU, Rui, Shenzhen, Guangdong 518129 (CN); COLONE, Fabiola, 00184 Rome (IT); FILIPPINI, Francesca, 00184 Rome (IT); SEGLIO, Marco Di, 00184 Rome (IT); HAN, Xiao, Shenzhen, Guangdong 518129 (CN)
(74) Representative: Isarpatent
(86) International application number: PCT/CN2023/100282
(87) International publication number: WO 2023/241638

(57) **Abstract**

This application relates to the field of communication technologies, and provides an information transmission method and an apparatus, to obtain a sensing result in a plurality of polarization directions. This application is applied to a wireless local area network system supporting a next-generation Wi-Fi protocol of IEEE 802.11ax like 802.11be, Wi-Fi 7, EHT, 802.11ad, 802.11ay, or 802.11bf, a next generation of 802.11be like Wi-Fi 8, or a next-generation 802.11 series protocol. In the method, a first device indicates a first polarization direction and a second polarization direction to a second device, and sends a PPDU to the second device. The first polarization direction is a polarization direction of a first field of the PPDU, and the second polarization direction is a polarization direction of a second field of the PPDU. Therefore, a sensing result in a co-polarization direction and a sensing result in a cross-polarization direction that are of second information may be obtained.

## Description

### CROSS-REFERENCE TO RELATED APPLICATIONS

This application claims priorities to Chinese Patent Application No. 202210682248.5, filed with the China National Intellectual Property Administration on June 15, 2022 and entitled "INFORMATION TRANSMISSION METHOD AND APPARATUS", and to Chinese Patent Application No. 202211364651.X, filed with the China National Intellectual Property Administration on November 2, 2022 and entitled "INFORMATION TRANSMISSION METHOD AND APPARATUS", both of which are incorporated herein by reference in their entireties.

### TECHNICAL FIELD

This application relates to the field of wireless communication technologies, and in particular, to an information transmission method and an apparatus.

### BACKGROUND

In sensing measurement, a signal has different characteristics in different polarization directions. It is clearly specified in the Institute of Electrical and Electronics Engineers (Institute of Electrical and Electronics Engineers, IEEE) 802.11ay that a receiver needs to switch a polarization direction every N/2 training subfields. Similarly, a transmitter also needs to switch a polarization direction every N/2 training subfields.

However, in the foregoing receiving/sending manner, regardless of a receiving manner in which the receiver receives a signal, only a sensing result in a co-polarization direction or a sensing result in a cross-polarization direction may be obtained.

### SUMMARY

This application provides an information transmission method and an apparatus, to obtain a sensing result in a co-polarization direction and a sensing result in a cross-polarization direction.

According to a first aspect, an information transmission method is provided. The method may be performed by a first device or a chip with similar functions of a first device. In the method, the first device sends first information to a second device. The first information indicates a first polarization direction and a second polarization direction. The first polarization direction is different from the second polarization direction. The first device sends a physical layer protocol data unit (physical layer protocol data unit, PPDU) to the second device, where the PPDU is used for sensing measurement. The first polarization direction is a polarization direction of a first field of the PPDU, and the second polarization direction is a polarization direction of a second field of the PPDU.

Based on the foregoing solution, the first device and the second device may exchange a polarization direction of second information via the first information, so that the first device and the second device can obtain a sensing result in a co-polarization direction and a sensing result in a cross-polarization direction that are of the second information in a proper sending manner and a proper receiving manner.

According to a second aspect, an information transmission method is provided. The method may be performed by a first device or a chip with similar functions of a first device. In the method, the first device receives first information from a second device. The first information indicates a first polarization direction and a second polarization direction. The first polarization direction is different from the second polarization direction. The first device sends a PPDU to the second device, where the PPDU is used for sensing measurement. The first polarization direction is a polarization direction of a first field of the PPDU, and the second polarization direction is a polarization direction of a second field of the PPDU.

Based on the foregoing solution, the first device and the second device may exchange a polarization direction of second information via the first information, so that the first device and the second device can obtain a sensing result in a co-polarization direction and a sensing result in a cross-polarization direction that are of the second information in a proper sending manner and a proper receiving manner.

In a possible implementation based on the first aspect and the second aspect, the first polarization direction is used by the second device to receive the first field, and the second polarization direction is used by the second device to receive the second field.

Based on the foregoing solution, the first device indicates, to the second device via the first information, the polarization direction in which the second information is received, so that the first device may obtain the sensing result in the co-polarization direction and the sensing result in the cross-polarization direction regardless of a polarization direction in which the second information is sent.

In a possible implementation based on the first aspect and the second aspect, the first device sends the first field to the second device in the first polarization direction. The first device sends the second field to the second device in the second polarization direction.

Based on the foregoing solution, the first device may freely select a polarization direction to send the second information, which is highly flexible. In this case, regardless of a polarization direction in which the second device receives the second information, the sensing result in the co-polarization direction and the sensing result in the cross-polarization direction may be obtained.

In a possible implementation based on the first aspect and the second aspect, the first information is carried in at least one of the following: a sensing measurement setup request, a sensing measurement setup response, an instance request, and an instance response.

Based on the foregoing solution, the first information is carried in the sensing measurement setup request, the sensing measurement setup response, the instance request, and the instance response, so that the first device and the second device can exchange the first information in a sensing measurement setup process or an instance exchange process, to facilitate subsequent PPDU transmission.

In a possible implementation based on the first aspect and the second aspect, the first information is carried in header information of the PPDU.

Based on the foregoing solution, the first information is exchanged via the header information of the PPDU, so that the polarization direction can be determined when the PPDU is transmitted. The first device may send a training field of the PPDU in the corresponding polarization direction, and the second device may receive the training field of the PPDU in the corresponding polarization direction, to obtain the sensing result in the co-polarization direction and the sensing result in the cross-polarization direction that are of the second information.

In a possible implementation based on the first aspect and the second aspect, the first polarization direction includes horizontal polarization in a linear polarization manner, and the second polarization direction includes vertical polarization in the linear polarization direction. Alternatively, the first polarization direction includes vertical polarization in a linear polarization manner, and the second polarization direction includes horizontal polarization in the linear polarization direction. Alternatively, the first polarization direction includes left-hand polarization in a circular polarization manner, and the second polarization direction includes right-hand polarization in the circular polarization manner. Alternatively, the first polarization direction includes right-hand polarization in a circular polarization manner, and the second polarization direction includes left-hand polarization in the circular polarization manner.

According to a third aspect, an information transmission method is provided. The method may be performed by a second device or a chip with similar functions of a second device. In the method, the second device receives first information from a first device. The first information indicates a first polarization direction and a second polarization direction. The first polarization direction is different from the second polarization direction. The second device receives a PPDU from the first device, where the PPDU is used for sensing measurement. The first polarization direction is a polarization direction of a first field of the PPDU, and the second polarization direction is a polarization direction of a second field of the PPDU.

Based on the foregoing solution, the first device and the second device may exchange a polarization direction of second information via the first information, so that the first device and the second device can obtain a sensing result in a co-polarization direction and a sensing result in a cross-polarization direction that are of the second information in a proper sending manner and a proper receiving manner.

According to a fourth aspect, an information transmission method is provided. The method may be performed by a second device or a chip with similar functions of a second device. In the method, the second device sends first information to a first device, where the first information indicates a first polarization direction and a second polarization direction. The first polarization direction is different from the second polarization direction. The second device receives a PPDU from the first device, where the PPDU is used for sensing measurement. The first polarization direction is a polarization direction of a first field of the PPDU, and the second polarization direction is a polarization direction of a second field of the PPDU.

Based on the foregoing solution, the first device and the second device may exchange a polarization direction of second information via the first information, so that the first device and the second device can obtain a sensing result in a co-polarization direction and a sensing result in a cross-polarization direction that are of the second information in a proper sending manner and a proper receiving manner.

In a possible implementation based on the third aspect and the fourth aspect, the second device receives the first field from the first device in the first polarization direction. The second device receives the second field from the first device in the second polarization direction.

Based on the foregoing solution, the first device indicates, to the second device via the first information, the polarization direction in which the second information is received, so that the first device may obtain the sensing result in the co-polarization direction and the sensing result in the cross-polarization direction regardless of a polarization direction in which the second information is sent.

In a possible implementation based on the third aspect and the fourth aspect, the first polarization direction is used by the first device to send the first field, and the second polarization direction is used by the first device to send the second field. The second device receives the first field in a third polarization direction. The second device receives the second field in a fourth polarization direction. The first polarization direction is the same as the third polarization direction, and the second polarization direction is different from the fourth polarization direction. Alternatively, the first polarization direction is different from the third polarization direction, and the second polarization direction is the same as the fourth polarization direction.

Based on the foregoing solution, the first device may freely select a polarization direction to send the second information, which is highly flexible. In this case, regardless of a polarization direction in which the second device receives the second information, the sensing result in the co-polarization direction and the sensing result in the cross-polarization direction may be obtained.

In a possible implementation based on the third aspect and the fourth aspect, the first information is carried in at least one of the following: a sensing measurement setup request, a sensing measurement setup response, an instance request, and an instance response.

Based on the foregoing solution, the first information is carried in the sensing measurement setup request, the sensing measurement setup response, the instance request, and the instance response, so that the first device and the second device can exchange the first information in a sensing measurement setup process or an instance exchange process, to facilitate subsequent PPDU transmission.

In a possible implementation based on the third aspect and the fourth aspect, the first information is carried in header information of the PPDU.

Based on the foregoing solution, the first information is exchanged via the header information of the PPDU, so that the polarization direction can be determined when the PPDU is transmitted. The first device may send a training field of the PPDU in the corresponding polarization direction, and the second device may receive the training field of the PPDU in the corresponding polarization direction, to obtain the sensing result in the co-polarization direction and the sensing result in the cross-polarization direction that are of the second information.

In a possible implementation based on the third aspect and the fourth aspect, the first polarization direction includes horizontal polarization in a linear polarization manner, and the second polarization direction includes vertical polarization in the linear polarization direction. Alternatively, the first polarization direction includes vertical polarization in a linear polarization manner, and the second polarization direction includes horizontal polarization in the linear polarization direction. Alternatively, the first polarization direction includes left-hand polarization in a circular polarization manner, and the second polarization direction includes right-hand polarization in the circular polarization manner. Alternatively, the first polarization direction includes right-hand polarization in a circular polarization manner, and the second polarization direction includes left-hand polarization in the circular polarization manner.

According to a fifth aspect, an information transmission method is provided. The method may be performed by a first device or a chip with similar functions of a first device. In the method, the first device sends a PPDU to a second device, where the PPDU is used for sensing measurement. A first polarization direction is a polarization direction in which the first device sends a first field of the PPDU, and a second polarization direction is a polarization direction in which the first device sends a second field of the PPDU. The first polarization direction is different from the second polarization direction, and the first polarization direction and the second polarization direction are pre-defined or pre-configured.

Based on the foregoing solution, the first device may send the PPDU to the second device in the pre-defined or pre-configured first polarization direction and second polarization direction, so that a sensing result in a co-polarization direction and a sensing result in a cross-polarization direction may be obtained regardless of a polarization direction in which the second device receives the PPDU.

According to a sixth aspect, an information transmission method is provided. The method may be performed by a first device or a chip with similar functions of a first device. In the method, the first device sends a PPDU, where the PPDU is used for sensing measurement. Polarization directions of a 1^{st} field to an (N/4)^{th} field of the PPDU are a first polarization direction, polarization directions of an (N/4+1)^{th} field to an (N/2)^{th} field of the PPDU are a second polarization direction, polarization directions of an (N/2+1)^{th} field to a (3N/4)^{th} field of the PPDU are the first polarization direction, and polarization directions of a (3N/4+1)^{th} field to an N^{th} field of the PPDU are the second polarization direction, where N is an integer greater than or equal to 2. Alternatively, a polarization direction of an n^{th} field of the PPDU is a first polarization direction, and a polarization direction of an (n+1)^{th} field of the PPDU is a second polarization direction, where n is greater than or equal to 1 and less than or equal to N, and N is an integer greater than or equal to 2. The first polarization direction is different from the second polarization direction.

Based on the foregoing solution, a behavior of sending the PPDU by the first device may be changed, that is, switching a polarization direction every N/2 training fields is changed to switching a polarization direction every N/4 training fields or switching a polarization direction every training field. Therefore, when receiving the PPDU in any manner, a second device may obtain a sensing result in a co-polarization direction and a sensing result in a cross-polarization direction.

According to a seventh aspect, an information transmission method is provided. The method may be performed by a first device or a chip with similar functions of a first device. In the method, the first device sends a PPDU, where the PPDU is used for sensing measurement. Polarization directions of a 1^{st} field to an L^{th} field of the PPDU are a first polarization direction, and polarization directions of an (L+1)^{th} field to a (2L)^{th} field of the PPDU are a second polarization direction, where L is an integer greater than or equal to 1. The first polarization direction is different from the second polarization direction.

In a possible implementation based on the fifth aspect, the sixth aspect, and the seventh aspect, the first polarization direction includes horizontal polarization in a linear polarization manner, and the second polarization direction includes vertical polarization in the linear polarization direction. Alternatively, the first polarization direction includes vertical polarization in a linear polarization manner, and the second polarization direction includes horizontal polarization in the linear polarization direction. Alternatively, the first polarization direction includes left-hand polarization in a circular polarization manner, and the second polarization direction includes right-hand polarization in the circular polarization manner. Alternatively, the first polarization direction includes right-hand polarization in a circular polarization manner, and the second polarization direction includes left-hand polarization in the circular polarization manner.

According to an eighth aspect, an information transmission method is provided. The method may be performed by a second device or a chip with similar functions of a second device. In the method, the second device receives a PPDU from a first device in a third polarization direction, where the PPDU is used for sensing measurement. A third polarization direction is a polarization direction in which the second device receives a first field of the PPDU, and a fourth polarization direction is a polarization direction in which the second device receives a second field of the PPDU. The third polarization direction is different from the fourth polarization direction, and the third polarization direction and the fourth polarization direction are pre-defined or pre-configured.

Based on the foregoing solution, the second device may receive the PPDU from the first device in the pre-defined or pre-configured third polarization direction and fourth polarization direction, so that a sensing result in a co-polarization direction and a sensing result in a cross-polarization direction may be obtained regardless of a polarization direction in which the first device sends the PPDU.

According to a ninth aspect, an information transmission method is provided. The method may be performed by a second device or a chip with similar functions of a second device. In the method, the second device receives a PPDU, where the PPDU is used for sensing measurement. Polarization directions of a 1^{st} field to an (N/4)^{th} field of the PPDU are a third polarization direction, polarization directions of an (N/4+1)^{th} field to an (N/2)^{th} field are a fourth polarization direction, polarization directions of an (N/2+1)^{th} field to a (3N/4)^{th} field of the PPDU are the third polarization direction, and polarization directions of a (3N/4+1)^{th} field to an N^{th} field of the PPDU are the fourth polarization direction, where N is an integer greater than or equal to 1. Alternatively, a polarization direction of an n^{th} field of the PPDU is a third polarization direction, and a polarization direction of an (n+1)^{th} field of the PPDU is a fourth polarization direction, where n is greater than or equal to 1 and less than or equal to N, and N is an integer greater than or equal to 1. The third polarization direction is different from the fourth polarization direction.

According to a tenth aspect, an information transmission method is provided. The method may be performed by a second device or a chip with similar functions of a second device. In the method, the second device receives a PPDU, where the PPDU is used for sensing measurement. Polarization directions of a 1^{st} field to an L^{th} field of the PPDU are a third polarization direction, and polarization directions of an (L+1)^{th} field to a (2L)^{th} field are a fourth polarization direction, where L is an integer greater than or equal to 1. The third polarization direction is different from the fourth polarization direction.

Based on the foregoing solution, a behavior of receiving the PPDU by the second device may be changed, that is, switching a polarization direction every N/2 training fields is changed to switching a polarization direction every N/4 training fields or switching a polarization direction every training field. Therefore, when sending the PPDU in any manner, a first device may obtain a sensing result in a co-polarization direction and a sensing result in a cross-polarization direction.

In a possible implementation based on the eighth aspect, the ninth aspect, and the tenth aspect, the third polarization direction includes horizontal polarization in a linear polarization manner, and the fourth polarization direction includes vertical polarization in the linear polarization direction. Alternatively, the third polarization direction includes vertical polarization in a linear polarization manner, and the fourth polarization direction includes horizontal polarization in the linear polarization direction. Alternatively, the third polarization direction includes left-hand polarization in a circular polarization manner, and the fourth polarization direction includes right-hand polarization in the circular polarization manner. Alternatively, the third polarization direction includes right-hand polarization in a circular polarization manner, and the fourth polarization direction includes left-hand polarization in the circular polarization manner.

According to an eleventh aspect, a communication apparatus is provided, and includes a processing unit and a transceiver unit.

The processing unit is configured to generate first information. The transceiver unit is configured to send the first information to a second device. The first information indicates a first polarization direction and a second polarization direction. The first polarization direction is different from the second polarization direction. The transceiver unit is further configured to send a PPDU to the second device, where the PPDU is used for sensing measurement. The first polarization direction is a polarization direction of a first field of the PPDU, and the second polarization direction is a polarization direction of a second field of the PPDU.

According to a twelfth aspect, a communication apparatus is provided, and includes a processing unit and a transceiver unit.

The transceiver unit is configured to receive first information from a second device. The first information indicates a first polarization direction and a second polarization direction. The first polarization direction is different from the second polarization direction. The processing unit is configured to generate a PPDU based on the first information. The transceiver unit is further configured to send the PPDU to the second device, where the PPDU is used for sensing measurement. The first polarization direction is a polarization direction of a first field of the PPDU, and the second polarization direction is a polarization direction of a second field of the PPDU.

In a possible implementation based on the eleventh aspect and the twelfth aspect, the first polarization direction is used by the second device to receive the first field, and the second polarization direction is used by the second device to receive the second field.

In a possible implementation based on the eleventh aspect and the twelfth aspect, the transceiver unit is specifically configured to send the first field to the second device in the first polarization direction. The transceiver unit is specifically configured to send the second field to the second device in the second polarization direction.

In a possible implementation based on the eleventh aspect and the twelfth aspect, the first information is carried in at least one of the following: a sensing measurement setup request, a sensing measurement setup response, an instance request, and an instance response.

In a possible implementation based on the eleventh aspect and the twelfth aspect, the first information is carried in header information of the PPDU.

In a possible implementation based on the eleventh aspect and the twelfth aspect, the first polarization direction includes horizontal polarization in a linear polarization manner, and the second polarization direction includes vertical polarization in the linear polarization direction. Alternatively, the first polarization direction includes vertical polarization in a linear polarization manner, and the second polarization direction includes horizontal polarization in the linear polarization direction. Alternatively, the first polarization direction includes left-hand polarization in a circular polarization manner, and the second polarization direction includes right-hand polarization in the circular polarization manner. Alternatively, the first polarization direction includes right-hand polarization in a circular polarization manner, and the second polarization direction includes left-hand polarization in the circular polarization manner.

According to a thirteenth aspect, a communication apparatus is provided, and includes a processing unit and a transceiver unit.

The transceiver unit is configured to receive first information from a first device. The first information indicates a first polarization direction and a second polarization direction. The first polarization direction is different from the second polarization direction. The processing unit is configured to determine the first polarization direction and the second polarization direction. The transceiver unit is further configured to receive a PPDU from the first device, where the PPDU is used for sensing measurement. The first polarization direction is a polarization direction of a first field of the PPDU, and the second polarization direction is a polarization direction of a second field of the PPDU.

According to a fourteenth aspect, a communication apparatus is provided, and includes a processing unit and a transceiver unit.

The processing unit is configured to generate first information. The transceiver unit is configured to send first information to a first device, where the first information indicates a first polarization direction and a second polarization direction. The first polarization direction is different from the second polarization direction. The transceiver unit is further configured to receive a PPDU from the first device, where the PPDU is used for sensing measurement. The first polarization direction is a polarization direction of a first field of the PPDU, and the second polarization direction is a polarization direction of a second field of the PPDU.

In a possible implementation based on the thirteenth aspect and the fourteenth aspect, the transceiver unit is specifically configured to receive the first field from the first device in the first polarization direction. The transceiver unit is specifically configured to receive the second field from the first device in the second polarization direction.

In a possible implementation based on the thirteenth aspect and the fourteenth aspect, the first polarization direction is used by the first device to send the first field, and the second polarization direction is used by the first device to send the second field. The transceiver unit is specifically configured to receive the first field in a third polarization direction. The transceiver unit is specifically configured to receive the second field in a fourth polarization direction. The first polarization direction is the same as the third polarization direction, and the second polarization direction is different from the fourth polarization direction. Alternatively, the first polarization direction is different from the third polarization direction, and the second polarization direction is the same as the fourth polarization direction.

In a possible implementation based on the thirteenth aspect and the fourteenth aspect, the first information is carried in at least one of the following: a sensing measurement setup request, a sensing measurement setup response, an instance request, and an instance response.

In a possible implementation based on the thirteenth aspect and the fourteenth aspect, the first information is carried in header information of the PPDU.

In a possible implementation based on the thirteenth aspect and the fourteenth aspect, the first polarization direction includes horizontal polarization in a linear polarization manner, and the second polarization direction includes vertical polarization in the linear polarization direction. Alternatively, the first polarization direction includes vertical polarization in a linear polarization manner, and the second polarization direction includes horizontal polarization in the linear polarization direction. Alternatively, the first polarization direction includes left-hand polarization in a circular polarization manner, and the second polarization direction includes right-hand polarization in the circular polarization manner. Alternatively, the first polarization direction includes right-hand polarization in a circular polarization manner, and the second polarization direction includes left-hand polarization in the circular polarization manner.

According to a fifteenth aspect, a communication apparatus is provided, and includes a processing unit and a transceiver unit.

The processing unit is configured to generate a PPDU. The transceiver unit is configured to send the PPDU to a second device, where the PPDU is used for sensing measurement. A first polarization direction is a polarization direction in which the first device sends a first field of the PPDU, and a second polarization direction is a polarization direction in which the first device sends a second field of the PPDU. The first polarization direction is different from the second polarization direction, and the first polarization direction and the second polarization direction are pre-defined or pre-configured.

According to a sixteenth aspect, a communication apparatus is provided, and includes a processing unit and a transceiver unit.

The processing unit is configured to generate a PPDU. The transceiver unit is configured to send the PPDU, where the PPDU is used for sensing measurement. Polarization directions of a 1^{st} field to an (N/4)^{th} field of the PPDU are a first polarization direction, polarization directions of an (N/4+1)^{th} field to an (N/2)^{th} field of the PPDU are a second polarization direction, polarization directions of an (N/2+1)^{th} field to a (3N/4)^{th} field of the PPDU are the first polarization direction, and polarization directions of a (3N/4+1)^{th} field to an N^{th} field of the PPDU are the second polarization direction, where N is an integer greater than or equal to 2. Alternatively, a polarization direction of an n^{th} field of the PPDU is a first polarization direction, and a polarization direction of an (n+1)^{th} field of the PPDU is a second polarization direction, where n is greater than or equal to 1 and less than or equal to N, and N is an integer greater than or equal to 2. The first polarization direction is different from the second polarization direction.

According to a seventeenth aspect, a communication apparatus is provided, and includes a processing unit and a transceiver unit.

The processing unit is configured to generate a PPDU. The transceiver unit is configured to send the PPDU, where the PPDU is used for sensing measurement. Polarization directions of a 1^{st} field to an L^{th} field of the PPDU are a first polarization direction, and polarization directions of an (L+1)^{th} field to a (2L)^{th} field of the PPDU are a second polarization direction, where L is an integer greater than or equal to 1. The first polarization direction is different from the second polarization direction.

In a possible implementation based on the fifteenth aspect, the sixteenth aspect, and the seventeenth aspect, the first polarization direction includes horizontal polarization in a linear polarization manner, and the second polarization direction includes vertical polarization in the linear polarization direction. Alternatively, the first polarization direction includes vertical polarization in a linear polarization manner, and the second polarization direction includes horizontal polarization in the linear polarization direction. Alternatively, the first polarization direction includes left-hand polarization in a circular polarization manner, and the second polarization direction includes right-hand polarization in the circular polarization manner. Alternatively, the first polarization direction includes right-hand polarization in a circular polarization manner, and the second polarization direction includes left-hand polarization in the circular polarization manner.

According to an eighteenth aspect, a communication apparatus is provided, and includes a processing unit and a transceiver unit.

The processing unit is configured to determine a third polarization direction and a fourth polarization direction. The transceiver unit is configured to receive a PPDU from a first device in the third polarization direction, where the PPDU is used for sensing measurement. The third polarization direction is a polarization direction in which the second device receives a first field of the PPDU, and the fourth polarization direction is a polarization direction in which the second device receives a second field of the PPDU. The third polarization direction is different from the fourth polarization direction, and the third polarization direction and the fourth polarization direction are pre-defined or pre-configured.

According to a nineteenth aspect, a communication apparatus is provided, and includes a processing unit and a transceiver unit.

The processing unit is configured to determine a third polarization direction and a fourth polarization direction. The transceiver unit is configured to receive the PPDU, where the PPDU is used for sensing measurement. Polarization directions of a 1^{st} field to an (N/4)^{th} field of the PPDU are the third polarization direction, polarization directions of an (N/4+1)^{th} field to an (N/2)^{th} field are the fourth polarization direction, polarization directions of an (N/2+1)^{th} field to a (3N/4)^{th} field of the PPDU are the third polarization direction, and polarization directions of a (3N/4+1)^{th} field to an N^{th} field of the PPDU are the fourth polarization direction, where N is an integer greater than or equal to 1. Alternatively, a polarization direction of an n^{th} field of the PPDU is a third polarization direction, and a polarization direction of an (n+1)^{th} field of the PPDU is a fourth polarization direction, where n is greater than or equal to 1 and less than or equal to N, and N is an integer greater than or equal to 1. The third polarization direction is different from the fourth polarization direction.

According to a twentieth aspect, a communication apparatus is provided, and includes a processing unit and a transceiver unit.

The processing unit is configured to determine a third polarization direction and a fourth polarization direction. The transceiver unit is configured to receive a PPDU, where the PPDU is used for sensing measurement. Polarization directions of a 1^{st} field to an L^{th} field of the PPDU are the third polarization direction, and polarization directions of an (L+1)^{th} field to a (2L)^{th} field are the fourth polarization direction, where L is an integer greater than or equal to 1. The third polarization direction is different from the fourth polarization direction.

In a possible implementation based on the eighteenth aspect, the nineteenth aspect, and the twentieth aspect, the third polarization direction includes horizontal polarization in a linear polarization manner, and the fourth polarization direction includes vertical polarization in the linear polarization direction. Alternatively, the third polarization direction includes vertical polarization in a linear polarization manner, and the fourth polarization direction includes horizontal polarization in the linear polarization direction. Alternatively, the third polarization direction includes left-hand polarization in a circular polarization manner, and the fourth polarization direction includes right-hand polarization in the circular polarization manner. Alternatively, the third polarization direction includes right-hand polarization in a circular polarization manner, and the fourth polarization direction includes left-hand polarization in the circular polarization manner.

According to a twenty-first aspect, an embodiment of this application provides a communication apparatus. The communication apparatus may be the communication apparatus in any one of the eleventh aspect to the twentieth aspect, or a chip disposed in the communication apparatus in any one of the eleventh aspect to the twentieth aspect in the foregoing embodiments. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus performs the method performed by the first device or the second device in the method embodiments in any one of the first aspect to the tenth aspect.

It should be understood that the communication interface may be implemented by using an antenna, a feeder, a codec, and the like in the communication apparatus. Alternatively, if the communication apparatus is a chip disposed in a network device or a terminal device, the communication interface may be an input/output interface of the chip, for example, an input/output pin. The communication apparatus may further include a transceiver, configured to perform communication between the communication apparatus and another device. For example, when the communication apparatus is the first device, the another device is the second device, or when the communication apparatus is the second device, the another device is the first device.

According to a twenty-second aspect, this application provides a communication apparatus, including a logic circuit and an input/output interface. The logic circuit is configured to perform the method performed by the first device or the second device. The input/output interface is configured to communicate with another apparatus.

According to a twenty-third aspect, an embodiment of this application provides a chip system. The chip system includes a processor, and may further include a memory, configured to implement the method performed by the communication apparatus in any one of the first aspect to the tenth aspect. In a possible implementation, the chip system further includes a memory, configured to store program instructions and/or data. The chip system may include a chip, or may include a chip and another discrete component.

According to a twenty-fourth aspect, an embodiment of this application provides a communication system. The communication system includes the communication apparatus in either the eleventh aspect or the thirteenth aspect. Alternatively, the communication system includes the communication apparatus in either the twelfth aspect or the fourteenth aspect. Alternatively, the communication system includes the communication apparatus in either the fifteenth aspect or the eighteenth aspect. Alternatively, the communication system includes the communication apparatus in either the sixteenth aspect or the nineteenth aspect. Alternatively, the communication system includes the communication apparatus in either the seventeenth aspect or the twentieth aspect.

According to a twenty-fifth aspect, this application provides a computer-readable storage medium. The computer-readable storage medium stores a computer program or instructions. When the computer program or the instructions are run, the method performed by the first device in the foregoing aspects is implemented, or the method performed by the second device in the foregoing aspects is implemented.

According to a twenty-sixth aspect, a computer program product is provided. The computer program product includes computer program code or instructions. When the computer program code or the instructions are run, the method performed by the first device in the foregoing aspects is performed, or the method performed by the second device in the foregoing aspects is performed.

According to a twenty-seventh aspect, a communication apparatus is provided. The communication apparatus includes units or modules configured to perform the methods in the foregoing aspects.

For beneficial effect of the eleventh aspect to the twenty-seventh aspect and the implementations of the eleventh aspect to the twenty-seventh aspect, refer to descriptions of beneficial effect of the methods in the first aspect to the tenth aspect and the implementations of the first aspect to the tenth aspect.

### BRIEF DESCRIPTION OF DRAWINGS

FIG. 1 is a diagram of a communication system according to an embodiment of this application;
FIG. 2 is an example flowchart of an information transmission method according to an embodiment of this application;
FIG. 3A is a diagram of a format of a DMG sensing measurement setup element according to an embodiment of this application;
FIG. 3B shows a structure of a DMG sensing beam descriptor element according to an embodiment of this application;
FIG. 3C shows an example in which a beam descriptor field carries first information according to an embodiment of this application;
FIG. 3D shows an example of a beam descriptor polarization subfield according to an embodiment of this application;
FIG. 4A is a diagram of a TDD beamforming information field according to an embodiment of this application;
FIG. 4B is a diagram of a format of a BRP sensing element according to an embodiment of this application;
FIG. 5A is a diagram of a format of a DMG sensing capabilities element according to an embodiment of this application;
FIG. 5B is a diagram of a format of a DMG sensing capabilities element field according to an embodiment of this application;
FIG. 6 is an example flowchart of an information transmission method according to an embodiment of this application;
FIG. 7 is an example flowchart of an information transmission method according to an embodiment of this application;
FIG. 8 is an example flowchart of an information transmission method according to an embodiment of this application;
FIG. 9 is an example flowchart of an information transmission method according to an embodiment of this application;
FIG. 10 is an example flowchart of an information transmission method according to an embodiment of this application;
FIG. 11A is a diagram of a structure of a DMG sensing report element according to an embodiment of this application;
FIG. 11B is a diagram of a DMG sensing poll frame according to an embodiment of this application;
FIG. 12 is a diagram of a communication apparatus according to an embodiment of this application;
FIG. 13 is a diagram of a communication apparatus according to an embodiment of this application;
FIG. 14 is a diagram of a communication apparatus according to an embodiment of this application; and
FIG. 15 is a diagram of a communication apparatus according to an embodiment of this application.

### DESCRIPTION OF EMBODIMENTS

For ease of understanding of the technical solutions provided in embodiments of this application, the following describes technical terms used in embodiments of this application.
(1) Sensing measurement may also be referred to as radio sensing, means that a transmitter and a receiver transmit a signal to implement an objective of discovering a target or determining a target status. Wireless local area network (wireless local area network, WLAN) sensing means that a station (station, STA) with a WLAN sensing capability uses a received WLAN signal to detect a feature of an expected target in a given environment. For example, the feature includes one or more of a range, a speed, an angle, a motion, existence or proximity, a gesture, and the like. The target includes one or more of an object, a person, an animal, and the like. The environment includes one or more of a room, a house, a vehicle, an enterprise, and the like.
   For example, the transmitter may send a signal used for sensing measurement to the receiver, and the receiver may measure the signal, to obtain a channel estimation result, for example, CSI. The receiver may perform sensing based on the CSI. Alternatively, the receiver may send the channel estimation result to the transmitter, and the transmitter performs target sensing or target status sensing based on the channel estimation result. For example, the receiver or the transmitter may process the CSI, to determine whether a moving object exists in the environment. For example, it is assumed that a moving target exists in the environment. A motion of the target affects amplitude, a frequency, and the like of a PPDU in a period of time, and the impact is reflected in CSI in the period of time. Therefore, the receiver or the transmitter may determine, based on the CSI, whether a moving object exists in the environment. During sensing, devices that participate in sensing are as follows:
   sensing initiator (sensing initiator): a device that initiates a sensing procedure;
   sensing responder (sensing responder): a device that responds to sensing initiated by the sensing initiator and participates in sensing;
   sensing transmitter (sensing transmitter): a device that sends a sensing signal, where the sensing signal may be a signal, for example, a PPDU, used for sensing measurement, and a sensing receiver may measure the sensing signal; and
   sensing receiver (sensing receiver): a device that receives the sensing signal.
(2) Polarization means polarization of electromagnetic waves, represents a characteristic in which a direction of an electric field strength vector at a given point in space varies with time, and is described by a trajectory of endpoints of the electric field strength vector that vary with time. Common polarization manners include linear polarization, circular polarization, elliptical polarization, and the like. The linear polarization manner is mainly classified into horizontal (horizontal) polarization and vertical (vertical) polarization. Specifically, during sensing measurement, when the transmitter transmits an H-polarized signal, the receiver may receive the signal in an H direction and/or a V direction. If the receiver receives the signal in the H direction, the signal is sent and received in a co-polarization direction H (send)-H (receive). If the receiver receives the signal in the V direction, the signal is sent and received in a cross-polarization direction H (send)-V (receive).
(3) A training field may also be referred to as a training subfield (training subfield), and is a structure or a sequence repeated on a tail of a PPDU used for sensing measurement at a high frequency. K training subfields form one group, and each group of training subfields includes six Golay complementary pairs. K is an integer greater than or equal to 1.

Embodiments of this application are applicable to a WLAN scenario, for example, applicable to the Institute of Electrical and Electronics Engineers (Institute of Electrical and Electronics Engineers, IEEE) 802.11 system standard, for example, 802.11a/b/g, 802.11n, 802.11ac, 802.11ax, or a next generation of 802.11ax, for example, the 802.11be standard, Wi-Fi 7, or extremely high throughput (extremely high throughput, EHT), 802.11ad, 802.11ay, 802.11bf, or a next generation of 802.11be, for example, Wi-Fi 8 or a next-generation standard. Alternatively, embodiments of this application may be applied to a wireless local area network system like an Internet of things (Internet of things, IoT) network or a vehicle-to-everything (Vehicle to X, V2X) network. Certainly, embodiments of this application may be further applicable to another possible communication system, for example, an LTE system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5G communication system, and a future 6G communication system.

The following uses an example in which embodiments of this application are applicable to a WLAN scenario. It should be understood that the WLAN develops from the 802.11a/g standard, and goes through 802.11n, 802.11ac, 802.11ax, and 802.11be that is currently being discussed. 802.11n may also be referred to as high throughput (high throughput, HT), 802.11ac may also be referred to as very high throughput (very high throughput, VHT), 802.11ax may also be referred to as high efficiency (high efficiency, HE) or Wi-Fi 6, 802.11be may also be referred to as EHT or Wi-Fi 7, and standards before HT, for example, 802.11a/b/g, may be collectively referred to as non-high throughput (Non-HT).

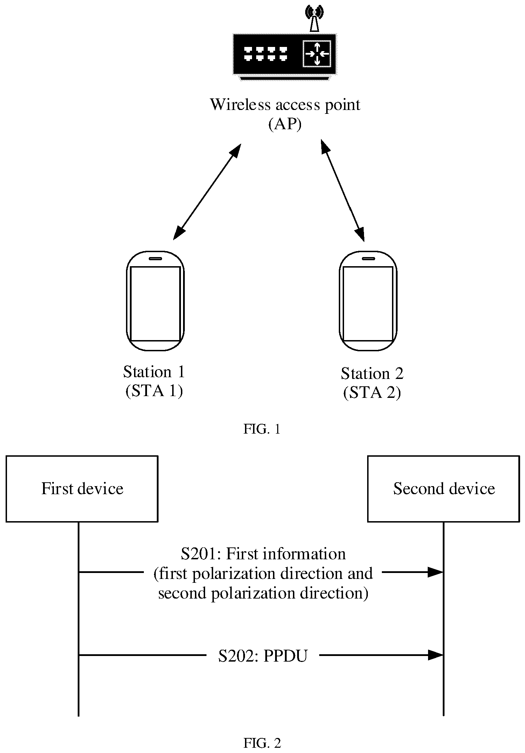

FIG. 1 is a diagram of a network architecture of a WLAN to which an embodiment of this application is applicable. In FIG. 1, that the WLAN includes one wireless access point (access point, AP) and two stations (station, STA) is used as an example. A STA associated with the AP can receive a radio frame sent by the AP, and can also send a radio frame to the AP. In addition, embodiments of this application are also applicable to communication between APs. For example, the APs may communicate with each other via a distributed system (distributed system, DS). Embodiments of this application are also applicable to communication between STAs. It should be understood that quantities of APs and STAs in FIG. 1 are merely an example. There may be more or less APs and STAs.

The access point may be an access point used by a terminal device (for example, a mobile phone) to access a wired (or wireless) network, and is mainly deployed at home, in a building, and in a campus. A typical coverage radius is tens of meters to hundreds of meters. Certainly, the access point may alternatively be deployed outdoors. The access point is equivalent to a bridge that connects a wired network and a wireless network. A main function of the access point is to connect various wireless network clients together and then connect the wireless network to the Ethernet. Specifically, the access point may be a terminal device (for example, a mobile phone) or a network device (for example, a router) with a Wi-Fi chip. The access point may be a device that supports the 802.11be standard. Alternatively, the access point may be a device that supports a plurality of wireless local area network (wireless local area network, WLAN) standards of the 802.11 family, for example, 802.11ax, 802.11ac, 802.11ad, 802.11ay, 802.11n, 802.11g, 802.11b, 802.11a, and a next-generation standard of 802.11be. The access point in this application may be an HE AP, an extremely high throughput (extremely high throughput, EHT) AP, or an access point applicable to a future generation Wi-Fi standard.

The station may be a wireless communication chip, a wireless sensor, a wireless communication terminal, or the like, and may also be referred to as a user. For example, the station may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Optionally, the station may support the 802.11be standard. Alternatively, the station may support a plurality of wireless local area network (wireless local area network, WLAN) standards of the 802.11 family, for example, 802.11ax, 802.11ac, 802.11n, 802.11g, 802.11b, 802.11a, and a next-generation standard of 802.11be.

The station in this application may be an HE STA or an extremely high throughput (extremely high throughput, EHT) STA, or may be a STA applicable to a future-generation Wi-Fi standard.

For example, the access point and the station may be devices used in the Internet of vehicles, Internet of things nodes, sensors, or the like in the Internet of things (Internet of things, IoT), smart cameras, smart remote controls, smart water or electricity meters, or the like in a smart home, and sensors in a smart city.

The AP and the STA in embodiments of this application may be an AP and a STA that are applicable to an IEEE 802.11 system standard. The AP is an apparatus that is deployed in a wireless communication network and that provides a wireless communication function for a STA associated with the AP. The AP may be used as a center of the communication system, and is usually a network-side product that supports MAC and a PHY in the 802.11 system standard, for example, may be a communication device like a base station, a router, a gateway, a repeater, a communication server, a switch, or a bridge. The base station may include a macro base station, a micro base station, a relay station, or the like in various forms. Herein, for ease of description, the devices mentioned above are collectively referred to as an AP. The STA is usually a terminal product, for example, a mobile phone or a notebook computer, that supports media access control (media access control, MAC) and a physical layer (physical, PHY) of the 802.11 system standard.

During sensing, a signal has different characteristics in different polarization directions. A same signal has different characteristics in an H-H manner and an H-V manner. To fully utilize a diversity gain of polarization, both information about a co-polarization direction (H-H or V-V) and information about a cross-polarization direction (H-V or V-H) usually need to be obtained.

In 802.11ay, a polarization switch pattern is introduced, and is used to determine a line of sight (line of sight, LOF) path. Currently, a training (training) field in 11ay is described by using parameters shown in Table 1. The parameters shown in Table 1 may be carried in a single carrier (single carrier, SC) mode (mode) PPDU or an orthogonal frequency division multiplexing (orthogonal frequency division multiplexing, OFDM) mode PPDU. For example, the parameters shown in Table 1 may be carried in an enhanced directional multi-gigabit (enhanced directional multi-gigabit, EDMG)-header (header)-A field in the SC mode PPDU or the OFDM mode PPDU. Optionally, the parameters shown in Table 1 may be carried a control mode (control mode) PPDU. For example, the parameters shown in Table 1 may be carried in an EDMG-header-A1 field in the control mode PPDU.

**Table 1: Description of TRN-related parameters in 11ay**

| Field | Quantity of bits | Start bit | Description |
|---|---|---|---|
| EDMG TRN length (length) | 8 | 64 | Indicates a quantity of TRN units (unit) present in a PPDU or a quantity of TRN units (unit) requested to perform receive beam training |
| EDMG TRN-unit (unit) M | 4 | 82 | When the PPDU is an EDMG beam refinement protocol (beam refinement protocol, BRP)-transmit (transmit, TX) PPDU, this field plus one indicates a quantity of last M TRN subfields (subfield) of each TRN unit, and a sending direction may be changed every N TRN subfields present in the M TRN subfields. |
| | | | When the PPDU is an EDMG BRP-receive (receive, RX)/TX PPDU, this field plus 1 indicates a quantity of TRN subfields in a TRN unit sent with same AWV following a possible AWV change. |
| | | | When the PPDU is an EDMG BRP-RX PPDU, this field is reserved. |
| EDMG TRN-unit (unit) N | 2 | 86 | When the PPDU is an EDMG BRP-TX PPDU, this field indicates a quantity of TRN subfields within EDMG TRN-unit M that are sent with the same AWV. |
| | | | 0 indicates one TRN subfield |
| | | | 1 indicates two TRN subfields |
| | | | 2 indicates three TRN subfields if EDMG TRN-unit M is equal to 1, 5, 8, 11, or 14; and indicates eight TRN subfields if EDMG TRN-unit M is equal to 7 or 15 |
| | | | 3 indicates four TRN subfields |
| | | | When the PPDU is an EDMG BRP-RX PPDU and an EDMG BRP-RX/TX PPDU, this field is reserved. |
| TRN subfield (subfield) sequence (sequence) length (length) | 2 | 88 | When the PPDU is an EDMG SC mode PPDU, this field is reserved if a value of the EDMG TRN length field is 0. Otherwise, this field indicates a length of the Golay (Golay) sequence used in the TRN subfield present in the EDMG TRN field. |
| | | | 0 indicates a normal sequence length of 128×N_{CB} |
| | | | 1 indicates a long sequence length of 256×N_{CB} |
| | | | 2 indicates a shot sequence length of 64×N_{CB} |
| | | | A value of 3 is reserved |
| | | | N_{CB} is an integer, and indicates an integer number of contiguous 2.16 GHz channels over which the TRN subfield is transmitted. |
| | | | When the PPDU is an EDMG OFDM mode PPDU, this field is reserved if a value of the EDMG TRN length field is 0. Otherwise, this field indicates a quantity of basic (basic) TRN subfield repetitions in the TRN subfields present in the EDMG TRN field |
| | | | 0 indicates two repetitions of the basic (basic) TRN subfields are included |
| | | | 1 indicates four repetitions of the basic (basic) TRN subfields are included |
| | | | 2 indicates one repetition of the basic (basic) TRN subfields is included |
| | | | A value of 3 is reserved |

It can be learned from Table 1 that, when a number indicated by EDMG TRN-unit (unit) N is an even number, a polarization direction of the TRN subfield (subfield) may be switched once every N/2 TRN subfields. For ease of description, EDMG TRN-unit (unit) N is briefly described as N below. It is assumed that N is equal to 4. The transmitter may switch a polarization direction every N/2=2 TRN subfields. It may be understood that, because N is equal to 4, there are four TRN subfields in total, and a sending manner is HHVV or VVHH.

It is clearly specified in 11ay that the receiver needs to switch a polarization direction every N/2 TRN subfields. Similarly, the transmitter also needs to switch a polarization direction every N/2 TRN subfields. If a sensing result is analyzed according to the existing rule in 11ay, the following result may be obtained.

**Table 2: Example of a sensing result obtained when N=2**

| | T1 | T2 |
|---|---|---|
| Sending manner | H | V |
| Receiving manner 1 | H (H-H) | V (V-V) |
| Receiving manner 2 | V (H-V) | H (V-H) |

**Table 3: Example of a sensing result obtained when N=2**

| | T1 | T2 |
|---|---|---|
| Sending manner | V | H |
| Receiving manner 1 | H (V-H) | V (H-V) |
| Receiving manner 2 | V (V-V) | H (H-H) |

As shown in Table 2, according to 11ay, when N=2, the transmitter sends a signal in an HV sending manner. Although it is specified in 11ay that the receiver needs to switch a polarization direction after N/2=1 TRN subfield, it is not specified whether the receiver receives a signal in an HV receiving manner or a VH receiving manner. Table 2 shows sensing results that may be obtained in the two receiving manners. It can be found that regardless of a receiving manner in which the receiver receives a signal, only a sensing result in a co-polarization direction (H-H or V-V) or a sensing result in a cross-polarization direction (H-V or V-H) may be obtained. However, the sensing result in the co-polarization direction and the sensing result in the cross-polarization direction cannot be both obtained.

Similarly, as shown in Table 3, if the transmitter sends a signal in a VH sending manner, based on a behavior of the receiver specified in 11ay, regardless of a receiving manner in which the receiver receives a signal, a sensing result in a co-polarization direction and a sensing result in a cross-polarization direction cannot be both obtained.

It should be noted that, according to the rule of the receiver in 11ay, when N is another optional even number, a same problem also occurs.

In view of this, an embodiment of this application provides an information transmission method. In the method, a first device and a second device can obtain a sensing result in a cross-polarization direction and a sensing result in a co-polarization direction through polarization manner exchange.

FIG. 2 is an example flowchart of an information transmission method according to an embodiment of this application. The method may include the following operations. In an embodiment shown in FIG. 2, a first device may be the AP or the STA shown in FIG. 1. Similarly, a second device may be the AP or the STA shown in FIG. 1.

S201: The first device sends first information to the second device.

Correspondingly, the second device receives the first information from the first device.

The first information may indicate a first polarization direction and a second polarization direction. It may be understood that the first polarization direction is different from the second polarization direction. Alternatively, the first information may indicate a polarization switch pattern, for example, the first information may indicate to switch from the first polarization direction to the second polarization direction. Alternatively, the first information may indicate a sending manner in which the first device sends second information.

In a possible case, the first polarization direction and the second polarization direction may be two different polarization directions in a linear polarization manner. For example, the first polarization direction may include horizontal polarization in the linear polarization manner, and the second polarization direction may include vertical polarization in the linear polarization manner. For another example, the first polarization direction may include vertical polarization in a linear polarization manner, and the second polarization direction may include horizontal polarization in the linear polarization manner.

In another possible case, the first polarization direction and the second polarization direction may be two different polarization directions in a circular polarization manner. For example, the first polarization direction may include left-hand polarization in the circular polarization manner, and the second polarization direction may include right-hand polarization in the circular polarization manner. For another example, the first polarization direction may include right-hand polarization in a circular polarization manner, and the second polarization direction may include left-hand polarization in the circular polarization manner.

It may be understood that the first polarization direction and the second polarization direction may alternatively be different polarization directions in another co-polarization manner. This is not specifically limited in this application.

For ease of description, the following provides descriptions by using an example in which the first polarization direction and the second polarization direction are two different polarization directions in the linear polarization manner.

S202: The first device sends the second information to the second device.

Correspondingly, the second device receives the second information from the first device.

The second information may be a PPDU, and the PPDU may be used for sensing measurement. For example, the second information may be one PPDU. For another example, the second information may be a plurality of PPDUs. For example, when N=2, the second information may include a first PPDU and a second PPDU. For another example, when N=4, the second information may include a PPDU 1, a PPDU 2, a PPDU 3, and a PPDU 4.

In a possible case, the first polarization direction may be a polarization direction of a first field of one PPDU, and the second polarization direction may be a polarization direction of a second field of the PPDU. It may be understood that the first field and the second field may be TRN subfields. For example, the first field may be a 1^{st} TRN subfield to an (N/2)^{th} TRN subfield, and the second field may be an (N/2+1)^{th} TRN subfield to an N^{th} TRN subfield. N is an integer greater than or equal to 2. For another example, the first field may be a 1^{st} TRN subfield to an L^{th} TRN subfield, and the second field may be an (L+1)^{th} TRN subfield to a (2L)^{th} TRN subfield. L is an integer greater than or equal to 1.

In another possible case, the first polarization direction may be a polarization direction of the first PPDU, and the second polarization direction may be a polarization direction of the second PPDU. It may be understood that a quantity of first PPDUs is not limited to 1, and a quantity of second PPDUs is also not limited to 1. For example, when a transmitter switches a polarization direction every N/2 PPDUs, the first PPDU may be a 1^{st} PPDU to an (N/2)^{th} PPDU, and the second PPDU may be an (N/2+1)^{th} PPDU to an N^{th} PPDU. N is an integer greater than or equal to 2. For another example, the first field may be a 1^{st} TRN subfield to an L^{th} TRN subfield, and the second field may be an (L+1)^{th} TRN subfield to a (2L)^{th} TRN subfield. L is an integer greater than or equal to 1.

In a possible implementation, the first polarization direction and the second polarization direction may be used by the first device to send the second information. For example, the first polarization direction is used by the first device to send a first field of one PPDU, and the second polarization direction is used by the first device to send a second field of the PPDU. In other words, the first device may send the first field of the PPDU in the first polarization direction, and send the second field of the PPDU in the second polarization direction. For another example, the first polarization direction is used by the first device to send the first PPDU, and the second polarization direction is used by the first device to send the second PPDU. In other words, the first device may send the first PPDU in the first polarization direction, and send the second PPDU in the second polarization direction.

Therefore, the first device may freely select a polarization direction to send the second information, which is highly flexible. In this case, the sensing result in the co-polarization direction and the sensing result in the cross-polarization direction may be obtained regardless of a polarization direction in which the second device receives the second information.

For example, when N=2, it is assumed that the first device sends the TRN subfield in an HV sending manner. The first device switches the polarization direction every N/2 TRN subfields, that is, the first device sends a 1^{st} TRN subfield in the H polarization direction, and sends a 2^{nd} TRN subfield in the V polarization direction. If the second device receives the TRN subfield in an HH receiving manner, that is, the second device receives the 1^{st} TRN subfield in the H polarization direction, and receives the 2^{nd} TRN subfield in the H polarization direction, the second device may obtain both a sensing result in a co-polarization direction (H-H) and a sensing result in a cross-polarization direction (V-H). If the second device receives the TRN subfield in a VV receiving manner, that is, the second device receives the 1^{st} TRN subfield in the V polarization direction, and receives the 2^{nd} TRN subfield in the V polarization direction, the second device may obtain both the sensing result in the co-polarization direction (H-V) and the sensing result in the cross-polarization direction (V-V), as shown in Table 4.

It may be understood that, when N=2, it is assumed that the first device sends the PPDU in the HV sending manner. The first device switches the polarization direction every N/2 PPDUs, that is, the first device sends the first PPDU in the H polarization direction, and sends the second PPDU in the V polarization direction. If the second device receives the first PPDU in the H polarization direction, and receives the second PPDU in the H polarization direction, the second device may obtain both the sensing result in the co-polarization direction (H-H) and the sensing result in the cross-polarization direction (V-H). If the second device receives the first PPDU in the V polarization direction, and receives the second PPDU in the V polarization direction, the second device may obtain both the sensing result in the cross-polarization direction (H-V) and the sensing result in the co-polarization direction (V-V), as shown in Table 4.

**Table 4: Example of a sensing result obtained when N=2**

| | T1 | T2 |
|---|---|---|
| Sending manner | H | V |
| Receiving manner 1 | H (H-H) | H (V-H) |
| Receiving manner 2 | V (H-V) | V (V-V) |

Table 4 is described by using an example in which when N=2, the first device sends the second information in the HV sending manner.

Similarly, when the first device sends the second information in the VH sending manner, and the second device receives the second information in the HH receiving manner, the second device may also obtain both the sensing result in the co-polarization direction (H-H) and the sensing result in the cross-polarization direction (V-H). When the second device receives the second information in the VV receiving manner, the second device may also obtain both the sensing result in the co-polarization direction (V-V) and the sensing result in the cross-polarization direction (H-V), as shown in Table 5.

**Table 5: Example of a sensing result obtained when N=2**

| | T1 | T2 |
|---|---|---|
| Sending manner | V | H |
| Receiving manner 1 | H (V-H) | H (H-H) |
| Receiving manner 2 | V (V-V) | V (H-V) |

Table 4 and Table 5 show examples of sensing results obtained when N=2. It may be understood that when N is an integer greater than or equal to 2, the first device indicates, via the first information, the polarization direction in which the second information is sent, and the second device selects, based on the first information, a polarization direction in which the second information is received, so that the sensing result in the co-polarization direction and the sensing result in the cross-polarization direction may also be obtained.

In the foregoing embodiment, the first device switches the polarization direction every N/2 TRN subfields. The following provides descriptions by using an example in which the first device switches the polarization direction every L TRN subfields. For example, when L=1 and 2L=2, it is assumed that the first device sends the TRN subfield in the HV sending manner. If the second device receives the TRN subfield in the HH receiving manner, that is, the second device receives the 1^{st} TRN subfield in the H polarization direction, and receives the 2^{nd} TRN subfield in the H polarization direction, the second device may obtain both the sensing result in the co-polarization direction (H-H) and the sensing result in the cross-polarization direction (V-H). If the second device receives the TRN subfield in the VV receiving manner, that is, the second device receives the 1^{st} TRN subfield in the V polarization direction, and receives the 2^{nd} TRN subfield in the V polarization direction, the second device may obtain both the sensing result in the cross-polarization direction (H-V) and the sensing result in the co-polarization direction (V-V).

It can be learned from the foregoing example that when the first device switches the polarization direction every L TRN subfields, the sensing result in the co-polarization direction and the sensing result in the cross-polarization direction may also be obtained.

In another possible implementation, the first polarization direction and the second polarization direction are used by the second device to receive the second information. For example, the first polarization direction is used by the second device to receive a first field of one PPDU, and the second polarization direction is used by the second device to receive a second field of the PPDU. For another example, the first polarization direction is used by the second device to receive the first PPDU, and the second polarization direction is used by the second device to receive the second PPDU.

Therefore, regardless of a polarization direction in which the first device sends the second information, the sensing result in the co-polarization direction and the sensing result in the cross-polarization direction may be obtained.

For example, when N=2, it is assumed that the first device indicates the second device to receive the TRN subfield in the HV receiving manner. The second device switches the polarization direction every N/2 TRN subfields, that is, the second device receives the 1^{st} TRN subfield in the H polarization direction, and receives the 2^{nd} TRN subfield in the V polarization direction. If the first device sends the TRN subfield in the HH sending manner, that is, the first device sends the 1^{st} TRN subfield in the H polarization direction, and sends the 2^{nd} TRN subfield in the H polarization direction, both the sensing result in the co-polarization direction (H-H) and the sensing result in the cross-polarization direction (H-V) may be obtained. If the first device sends the TRN subfield in the VV sending manner, that is, the first device sends the 1^{st} TRN subfield in the V polarization direction, and sends the 2^{nd} TRN subfield in the V polarization direction, both the sensing result in the cross-polarization direction (V-H) and the sensing result in the co-polarization direction (V-V) may be obtained, as shown in Table 6.

It may be understood that, when N=2, it is assumed that the first device indicates the second device to receive the PPDU in the HV receiving manner. The second device switches the polarization direction every N/2 PPDUs, that is, the second device receives the first PPDU in the H polarization direction, and receives the second PPDU in the V polarization direction. If the first device sends the PPDU in the HH sending manner, that is, the first device sends the first PPDU in the H polarization direction, and sends the second PPDU in the H polarization direction, both the sensing result in the co-polarization direction (H-H) and the sensing result in the cross-polarization direction (H-V) may be obtained. If the first device sends the PPDU in the VV sending manner, that is, the first device sends the first PPDU in the V polarization direction, and sends the second PPDU in the V polarization direction, both the sensing result in the cross-polarization direction (V-H) and the sensing result in the co-polarization direction (V-V) may be obtained, as shown in Table 6.

**Table 6: Example of a sensing result obtained when N=2**

| | T1 | T2 |
|---|---|---|
| Receiving manner | H | V |
| Sending manner 1 | H (H-H) | H (H-V) |
| Sending manner 2 | V (V-H) | V (V-V) |

Table 6 is described by using an example in which when N=2, the second device receives the second information in the HV receiving manner.

Similarly, when the second device sends the second information in the VH receiving manner, and the first device sends the second information in the HH sending manner, the first device may also obtain both the sensing result in the co-polarization direction (H-H) and the sensing result in the cross-polarization direction (H-V). When the first device sends the second information in the VV sending manner, the first device may also obtain both the sensing result in the co-polarization direction (V-V) and the sensing result in the cross-polarization direction (V-H), as shown in Table 7.

**Table 7: Example of a sensing result obtained when N=2**

| | T1 | T2 |
|---|---|---|
| Receiving manner | V | H |
| Sending manner 1 | H (H-V) | H (H-H) |
| Sending manner 2 | V (V-V) | V (V-H) |

Table 6 and Table 7 show examples of sensing results obtained when N=2. It may be understood that, when N is an integer greater than or equal to 2, the first device indicates, via the first information, the polarization direction in which the second information is sent, so that the sensing result in the co-polarization direction and the sensing result in the cross-polarization direction may be obtained regardless of a polarization direction in which the second device receives the second information.

The foregoing shows an example in which the second device switches the polarization direction every N/2 TRN subfields. The following is described by using an example in which the second device switches the polarization direction every L TRN subfields. For example, L=1 and 2L=2. It is assumed that the first device indicates the second device to receive the TRN subfield in the HV receiving manner, that is, the second device receives the 1^{st} TRN subfield in the H polarization direction, and receives the 2^{nd} TRN subfield in the V polarization direction. If the first device sends the TRN subfield in the HH sending manner, that is, the first device sends the 1^{st} TRN subfield in the H polarization direction, and sends the 2^{nd} TRN subfield in the H polarization direction, both the sensing result in the co-polarization direction (H-H) and the sensing result in the cross-polarization direction (H-V) may be obtained. If the first device sends the TRN subfield in the VV sending manner, that is, the first device sends the 1^{st} TRN subfield in the V polarization direction, and sends the 2^{nd} TRN subfield in the V polarization direction, both the sensing result in the cross-polarization direction (V-H) and the sensing result in the co-polarization direction (V-V) may be obtained.

In a possible implementation, the first device may indicate the first information via a third field, for example, a polarization switch pattern field (polarization switch pattern field). It may be understood that the third field may be a field with 1 bit, 2 bits, or more bits. The following provides descriptions by using Table 8.

**Table 8: Example of a third field**

| Field | Description |
|---|---|
| Polarization switch pattern field (polarization switch pattern field) | 0: When L=1, it indicates HV; when N=2, it indicates HV; and when N=4, it indicates HHVV |
| | 1: When L=1, it indicates VH; when N=2, it indicates VH; and when N=4, it indicates VVHH |
| | 2: When L=1, it indicates VHVH; when L=2, it indicates VVHH; and when N=4, it indicates VHVH |
| | 3: When L=1, it indicates HVHV; when L=2, it indicates HHVV; and when N=4, it indicates HVHV |

It can be learned from Table 8 that, when a value of the third field is 0, if L=1, the first polarization direction is H, and the second polarization direction is V. Optionally, if L=1, it may further indicate that the sending manner of the first device is HV. If N=2, the first polarization direction is H, and the second polarization direction is V. Optionally, if N=2, it may further indicate that the sending manner of the first device is HV. If N=4, the first polarization direction is H, and the second polarization direction is V. Optionally, if N=4, it may further indicate that the sending manner of the first device is HHVV.

When the value of the third field is 1, if L=1, the first polarization direction is H, and the second polarization direction is V. Optionally, if L=1, it may further indicate that the sending manner of the first device is HV. If N=2, the first polarization direction is V, and the second polarization direction is H. Optionally, if N=2, it may further indicate that the sending manner of the first device is VH. If N=4, the first polarization direction is V, and the second polarization direction is H. Optionally, if N=4, it may further indicate that the sending manner of the first device is VVHH. The rest may be deduced by analogy.

It should be noted that Table 8 is merely used as an example of the third field. When N is an integer greater than or equal to 2, the first polarization direction and the second polarization direction may alternatively be indicated via the third field. Optionally, the third field may further indicate the sending manner of the first device.

In a possible case, the third field, namely, the first information, may be carried in a sensing measurement setup request (measurement setup request) or a sensing measurement setup response (measurement setup response). For example, a field may be added to the sensing measurement setup request or the sensing measurement setup response to carry the first information. For another example, the first information may be carried in a present field of the sensing measurement setup request or the sensing measurement setup response. In other words, the present field of the sensing measurement setup request or the sensing measurement setup response may be reused for the first information. For another example, a bit sequence may be added to a present field of the sensing measurement setup request or the sensing measurement setup response, to carry the first information.

For example, in the embodiment shown in FIG. 2, the first device is a sensing initiator, and the second device is a sensing responder. In other words, the first device may initiate a sensing procedure to the second device. The first device may send the sensing measurement setup request to the second device, and the second device may send the sensing measurement setup response to the first device. Optionally, the sensing measurement setup request may carry the first information, that is, the first device may indicate the first polarization direction and the second polarization direction to the second device via the sensing measurement setup request. Optionally, the sensing measurement setup response may also carry third information, the third information may include first indication information, and the first indication information may indicate to agree to or confirm the polarization direction indicated by the first information. In a possible case, the third information may further include the first information.

For another example, it is assumed that the second device is a sensing initiator, and the first device is a sensing responder. In other words, the second device may initiate a sensing procedure to the first device. The second device may send the sensing measurement setup request to the first device, and the first device may send the sensing measurement setup response to the second device. Optionally, the sensing measurement setup response may carry the first information, that is, the first device may indicate the first polarization direction and the second polarization direction to the second device via the sensing measurement setup response. Optionally, the sensing measurement setup request may carry the first information. It may be understood that the sensing measurement setup request carrying the first information may be understood as that the second device requests the first device to use the first polarization direction and the second polarization direction. In a possible case, when the sensing measurement setup response carries the first information, the first information may indicate to agree to or confirm the polarization direction, namely, the first polarization direction and the second polarization direction, requested by the second device.

For example, the sensing measurement setup request may be a DMG sensing (sensing) measurement setup element (element). In other words, the first information may be carried in the DMG sensing measurement setup element.

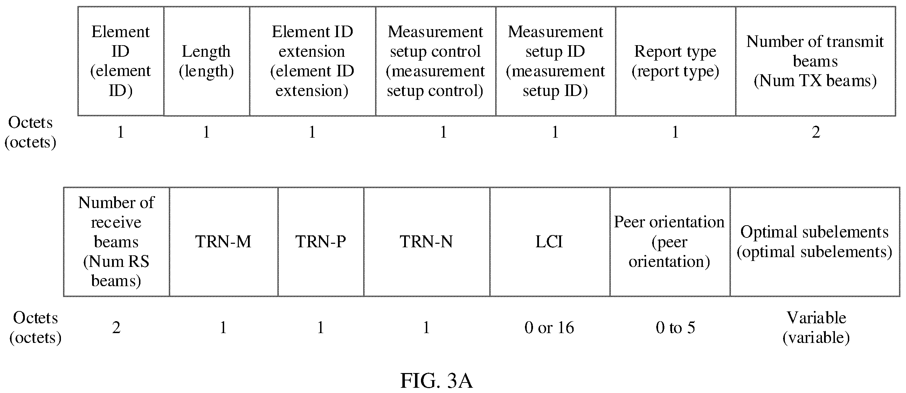

FIG. 3A shows a structure of a DMG sensing measurement setup element. For example, a field may be added to the DMG sensing measurement setup element to carry the first information. It may be understood that the added field may be located before or after any field of the DMG sensing measurement setup element. This is not specifically limited in this application. For example, the added field may be located between a measurement setup control (measurement setup control) field and a measurement setup identifier (measurement setup ID) field in FIG. 3A. For another example, the first information may be located between a measurement setup identifier (measurement setup ID) field and a report type (report type) field in FIG. 3A.

For another example, the first information may be carried in a present field of the DMG sensing measurement setup element. In other words, the present field of the DMG sensing measurement setup element may be reused for the first information, for example, the measurement setup control field may be reused.

It may be understood that the DMG sensing measurement setup element shown in FIG. 3A is merely used as a possible implementation of the sensing measurement setup request. The first information mentioned in embodiments of this application may alternatively be carried in a sensing measurement setup request in another sensing scenario. This is not specifically limited in this application.

In another possible case, the third field, namely, the first information, may be carried in a DMG sensing beam descriptor element (DMG sensing beam descriptor element). For example, the first information may be carried in a DMG sensing beam descriptor element (DMG sensing beam descriptor element) included in one or more of a DMG sensing measurement setup request (DMG measurement setup request) frame, an association request (association request) frame, a reassociation request (reassociation request) frame, a reassociation response (reassociation response) frame, a probe request (probe request) frame, a probe response (probe response) frame, a DMG beacon (DMG beacon) frame, an information request (information request) frame, and an information response (information response) frame.

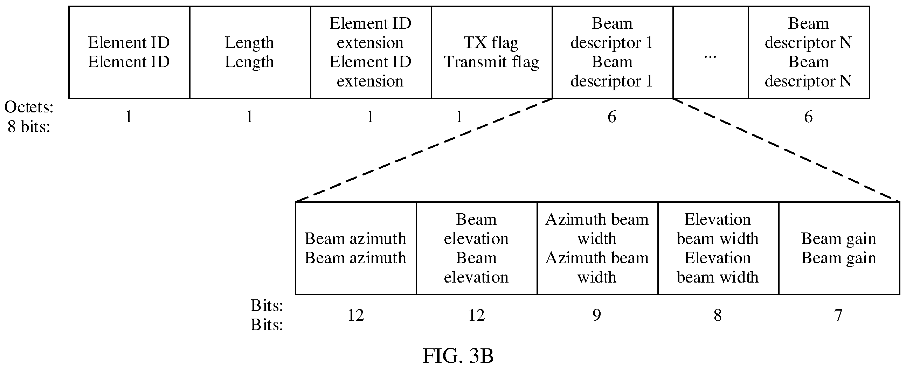

FIG. 3B shows a structure of a DMG sensing beam descriptor element. For example, a beam descriptor field (beam descriptor field) of the DMG sensing beam descriptor element may be modified to indicate the first information. In a possible implementation, one or more bits of the beam description field indicate information about horizontal polarization/vertical polarization and/or information about left-hand circular polarization/right-hand circular polarization and/or information about other polarization. The one or more bits may be an extension field of the beam descriptor field or a bit added to the beam descriptor field. Alternatively, an existing bit of the beam descriptor field may be modified and reused.

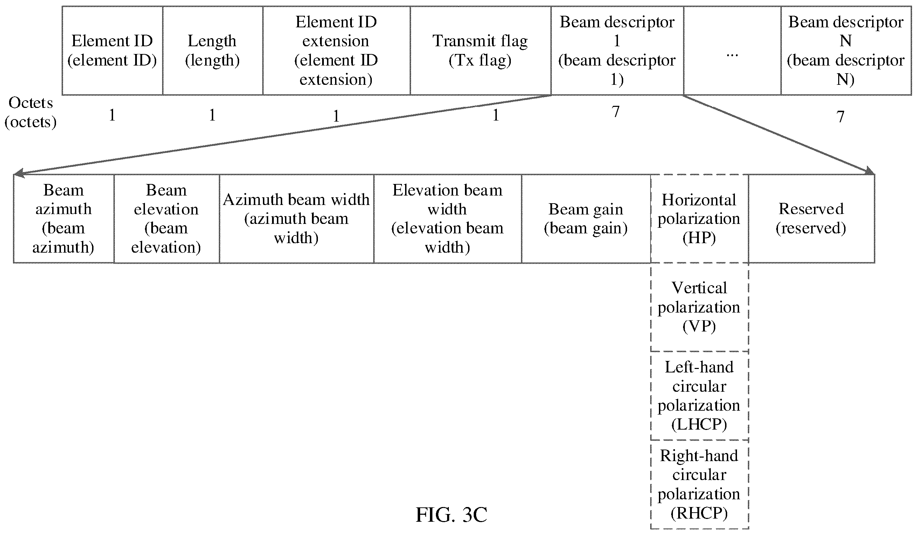

For example, refer to FIG. 3C. Each beam descriptor field describes information about one beam. In a polarization case, the beam descriptor field may be information about a horizontally polarized beam or information about a vertically polarized beam. If a beam polarization direction described by the beam descriptor field is horizontal polarization, an HP subfield may be used for indication. If a beam polarization direction described by the beam descriptor field is vertical polarization, a VP subfield may be used for indication. If a beam polarization direction described by the beam descriptor field is left-hand circular polarization, an LHCP subfield may be used for indication. If a beam polarization direction described by the beam descriptor field is right-hand circular polarization, an RHCP subfield may be used for indication.

In addition to the polarization manners described above, a corresponding polarization information indication manner may be further added to a beam descriptor field of a corresponding beam.

For example, in another implementation, in the DMG sensing beam descriptor element, all beam descriptor fields may be arranged according to a specific rule. In this case, the DMG sensing beam descriptor element includes one piece of indication information that indicates an arrangement manner of the beam descriptor fields of the DMG sensing beam descriptor element.

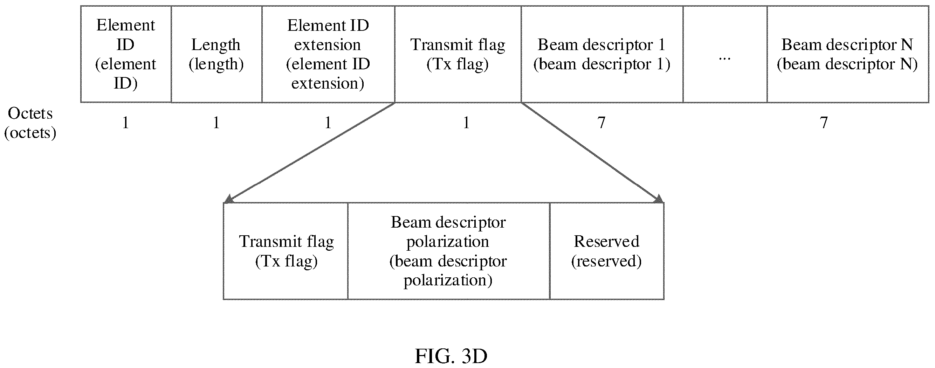

For example, refer to FIG. 3D. A beam descriptor polarization (beam descriptor polarization) subfield may be added to a transmit flag (TX flag) field, and is used to describe an arrangement manner of subsequent beam descriptor polarization. The beam descriptor polarization subfield may indicate an arrangement manner of a subsequent beam descriptor.

For example, when the beam descriptor polarization subfield is 0, the subsequent beam descriptor field does not carry any polarization information. When the beam descriptor polarization subfield is 1, a subsequent beam descriptor field with an odd index (index) is horizontally polarized, and a beam descriptor field with an even index (index) is vertically polarized. The reverse is also true. When the beam descriptor polarization subfield is 1, a subsequent beam descriptor field with an even index (index) is horizontally polarized, and a beam descriptor field with an odd index (index) is vertically polarized.

When the beam descriptor polarization subfield is 2, a subsequent beam descriptor polarization field with an odd index (index) is left-hand circularly polarized, and a beam descriptor polarization field with an even index (index) is right-hand circularly polarized. The reverse is also true. When the beam descriptor polarization subfield is 2, a subsequent beam descriptor field with an even index (index) is left-hand circularly polarized, and a subsequent beam descriptor field with an odd index (index) is right-hand circularly polarized.

That the beam descriptor polarization subfield is 3 may be an information indication of another possible polarization manner.

During subsequent sensing, the sensing initiator may set a transmitted polarized beam and/or a received polarized beam based on a transmit beam list subelement (TX beam list subelement) and a receive beam list subelement (RX beam list subelement) of a DMG sensing setup request element.

In another possible case, the third field, namely, the first information, may be carried in an instance request (instance request) or an instance response (instance response). Optionally, the instance request may also be referred to as a sensing instance request (sensing instance request), and the instance response may also be referred to as a sensing instance response (sensing instance response). For example, a field may be added to the instance request or the instance response to carry the first information. For another example, the first information may be carried in a present field of the instance request or the instance response. In other words, the present field of the instance request or the instance response may be reused for the first information. For another example, a bit sequence may be added to a present field of the instance request or the instance response, to carry the first information.

For example, in the embodiment shown in FIG. 2, the first device is a sensing initiator, and the second device is a sensing responder. In other words, the first device may initiate a sensing procedure to the second device. The first device may send the instance request to the second device, and the second device may send the instance response to the first device. Optionally, the instance request may carry the first information, that is, the first device may indicate the first polarization direction and the second polarization direction to the second device via the instance request. Optionally, the instance response may also carry third information, the third information may include first indication information, and the first indication information may indicate to agree to or confirm the polarization direction indicated by the first information. In a possible case, the third information may further include the first information.

For another example, it is assumed that the second device is a sensing initiator, and the first device is a sensing responder. In other words, the second device may initiate a sensing procedure to the first device. The second device may send the instance request to the first device, and the first device may send the instance response to the second device. Optionally, the instance response may carry the first information, that is, the first device may indicate the first polarization direction and the second polarization direction to the second device via the instance response. Optionally, the sensing measurement setup request may carry the first information. It may be understood that the instance request carrying the first information may be understood as that the second device requests the first device to use the first polarization direction and the second polarization direction. In a possible case, when the instance response carries the first information, the first information may indicate to agree to or confirm the polarization direction, namely, the first polarization direction and the second polarization direction, requested by the second device.

For example, the instance request may be a DMG multistatic (multistatic) sensing request (sensing request). In other words, the first information may be carried in the DMG multistatic sensing request.

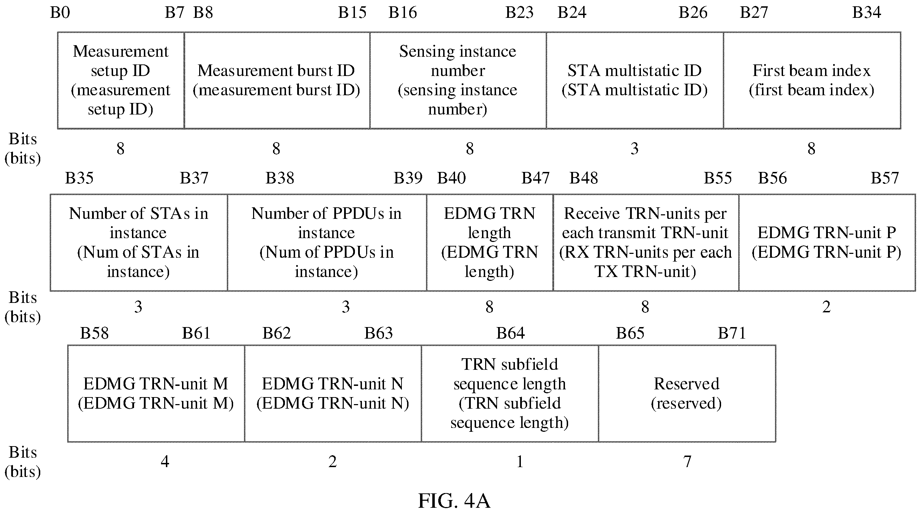

FIG. 4A shows a format (format) of a time division duplexing (time division duplexing, TDD) beamforming (beamforming) information (information) field (field) of a DMG multistatic sensing request. For example, a field may be added to the TDD beamforming information field to carry the first information. It may be understood that the added field may be located before or after any field of the format of the TDD beamforming information field. This is not specifically limited in this application. For example, the added field may be located between a sensing instance number (sensing instance number) and a STA multistatic ID (STA multistatic ID) in FIG. 4A. For another example, the first information may be located between a measurement burst ID (measurement burst ID) and a sensing instance number (sensing instance number) in FIG. 4A.

For another example, the first information may be carried in a present field of the TDD beamforming information field. In other words, the present field of the TDD beamforming information field may be reused for the first information, for example, a reserved (reserved) field may be reused.

It may be understood that the TDD beamforming information field shown in FIG. 4A is merely used as a possible implementation of the instance request. The TDD beamforming information field shown in FIG. 4A is used in an instance request frame in a multistatic sensing scenario. The first information mentioned in embodiments of this application may alternatively be carried in an instance request in another sensing scenario.

It should be noted that FIG. 4A shows related fields of the instance request frame in the multistatic sensing scenario. There are a plurality of sensing types in 802.11bf, for example, monostatic sensing, monostatic sensing with coordination, bistatic sensing, bistatic sensing with coordination, and multistatic sensing. It may be understood that, in some sensing scenarios, for example, monostatic sensing, monostatic sensing with coordination, bistatic sensing, and bistatic sensing with coordination scenarios, a structure of the instance request frame is not clearly defined. Therefore, in these sensing scenarios, the first information may be carried in a frame in which a sensing transmitter and a sensing receiver exchange sensing instances.

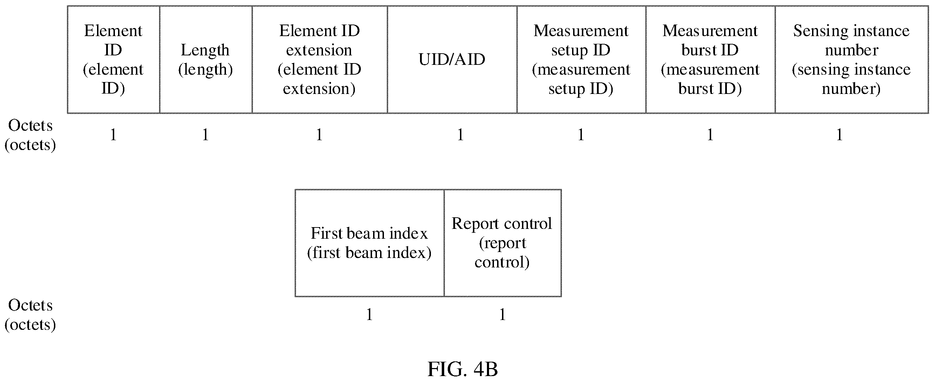

FIG. 4B shows a format of a BRP sensing element in bistatic sensing. The first information may be carried in the BRP sensing element. For example, a field may be added to the BRP sensing element to carry the first information. It may be understood that the added field may be located before or after any field of the BRP sensing element. This is not specifically limited in this application. For example, the added field may be located between a measurement setup (measurement setup) ID and a measurement burst (measurement burst) ID in FIG. 4B. For another example, the first information may be carried in a present field of the BRP sensing element. In other words, the present field of the BRP sensing element may be reused for the first information, for example, a sensing instance number (sensing instance number) may be reused.

In another possible case, the third field, namely, the first information, may be carried in header information of the PPDU. For example, the first information may be carried in header information of the foregoing PPDU. For another example, the first information may be carried in header information of the first PPDU or the second PPDU.

For example, a field may be added to the header information to carry the first information. For another example, a present field of the header information may be reused to carry the first information.

For example, the first information may be carried in EDMG-header-A, for example, a reserved part in Table 1. It may be understood that EDMG-header-A in Table 1 is an example of header information of an SC/OFDM mode SU PPDU in 11ay.

For another example, in addition to the SC/OFDM mode PPDU, a control mode (control mode) PPDU further exists in 11ay, and the first information may be carried in EDMG-header-A2 of the control mode PPDU, for example, a reserved bit of EDMG-header-A2.

It may be understood that the EDMG header information is merely used as a possible implementation of the header information of the PPDU, and the first information may alternatively be carried in header information of a PPDU in another scenario.

Based on the foregoing solutions, the first device may indicate, to the second device via the first information, the polarization direction in which the second information is received. In this case, the first device may flexibly select a polarization direction to send the second information, so that the sensing result in the co-polarization direction and the sensing result in the cross-polarization direction may be obtained regardless of the polarization direction in which the first device sends the second information. Alternatively, the first device may indicate, to the second device via the first information, the polarization direction in which the second information is sent. In this case, regardless of a polarization direction in which the second device receives the second information, the sensing result in the co-polarization direction and the sensing result in the cross-polarization direction may be obtained.

In a possible implementation, the first device and the second device may exchange capability information. For example, the capability information of the first device may include a polarization direction supported by the first device. In other words, the capability information of the first device may include whether the first device supports polarization direction switching. Similarly, for the capability information of the second device, refer to the capability information of the first device.

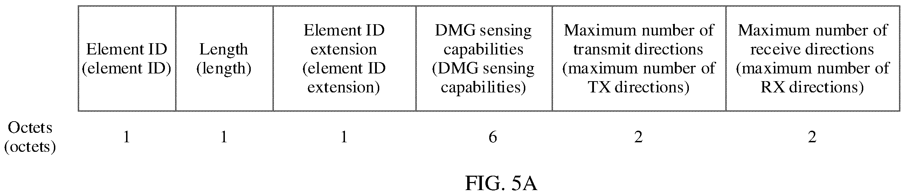

In a possible case, the capability information may be carried in a DMG sensing capabilities element. FIG. 5A shows a structure of a DMG sensing capabilities element. For example, a field may be added to the DMG sensing capabilities element to carry the capability information. For another example, a present field of the DMG sensing capabilities element may be reused for the first information. In other words, the present field of the DMG sensing capabilities element may indicate the first information, for example, a DMG sensing capabilities (DMG sensing capabilities) field is reused.

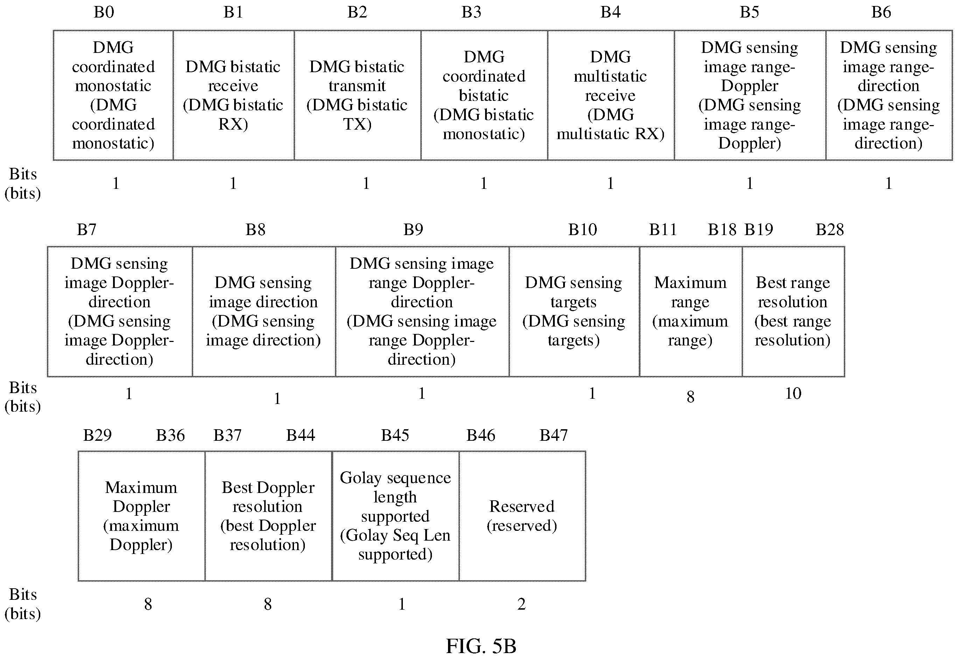

FIG. 5B shows a structure of a DMG sensing capabilities field. When the sensing capabilities field is reused to indicate the capability information, reserved bits of the field, for example, B46 and B47, may be used. For example, B46 may indicate a supported linear polarization direction, or B46 may indicate whether linear polarization direction switching is supported. For example, B47 may indicate a supported circular polarization direction, or B47 may indicate whether circular polarization direction switching is supported.

In another possible implementation, when any one or more pieces of capability information in the capability information of the first device or the capability information of the second device indicate that polarization direction switching is supported, the first device may send the first information to the second device. In other words, when either the first device or the second device supports polarization direction switching, the first device indicates the first polarization direction and the second polarization direction to the second device via the first information.

For example, it is assumed that the capability information of the first device includes polarization directions, namely, an H polarization direction and a V polarization direction, supported by the first device. It can be learned that the first device supports two different polarization directions, that is, the first device supports linear polarization direction switching. Therefore, the first device may send the first information to the second device, where the first information indicates the H polarization direction and the V polarization direction.

It may be understood that the capability information of the second device may indicate that polarization direction switching is supported, or may indicate that polarization direction switching is not supported. For example, the capability information of the second device includes a linear polarization direction, namely, an H polarization direction, supported by the second device. In other words, the second device does not support linear polarization direction switching. However, the second device may receive, in the H polarization direction, the PPDU sent by the first device, so that the sensing result in the co-polarization direction and the sensing result in the cross-polarization direction may be obtained.

For another example, it is assumed that the capability information of the second device includes a polarization direction, namely, an H polarization direction and a V polarization direction, supported by the first device. It can be learned that the second device supports two different polarization directions, that is, the second device supports linear polarization direction switching. Therefore, the first device may send the first information to the second device, where the first information indicates the H polarization direction and the V polarization direction.

It may be understood that the capability information of the first device may indicate that polarization direction switching is supported, or may indicate that polarization direction switching is not supported. For example, the capability information of the first device includes a linear polarization direction, namely, the H polarization direction, supported by the first device. In other words, the first device does not support linear polarization direction switching. However, the first device may send the PPDU to the second device in the H polarization direction, so that the sensing result in the co-polarization direction and the sensing result in the cross-polarization direction may be obtained.

Optionally, when the capability information of the first device indicates that the first device does not support polarization direction switching, the first information may indicate the second device to receive the second information in the first polarization direction and the second polarization direction. When the capability information of the second device indicates that the second device does not support polarization direction switching, the first information may indicate the first device to send the second information in the first polarization direction and the second polarization direction.

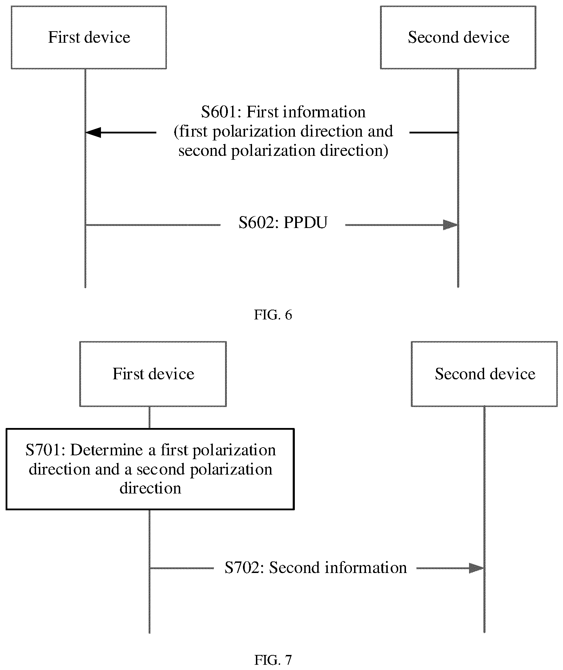

In the embodiment shown in FIG. 2, the sensing transmitter sends the first information to the sensing receiver. An embodiment of this application further provides another information transmission method. In the method, a sensing receiver may send first information to a sensing transmitter. The following provides descriptions by using FIG. 6.

FIG. 6 is an example flowchart of an information transmission method according to an embodiment of this application. The method may include the following operations.

S601: A second device sends first information to a first device.

Correspondingly, the first device receives the first information from the second device.

For the first information, refer to the first information in the embodiment shown in FIG. 2. For example, the first information may indicate a first polarization direction and a second polarization direction. It may be understood that the first polarization direction is different from the second polarization direction. Alternatively, the first information may indicate a polarization switch pattern, for example, the first information may indicate to switch from the first polarization direction to the second polarization direction. Alternatively, the first information may indicate a sending manner in which the first device sends second information.

S602: The first device sends the second information to the second device.

Correspondingly, the second device receives the second information from the first device.

For the second information, refer to the second information in the embodiment shown in FIG. 2. For example, the second information may be a PPDU, and the PPDU may be used for sensing measurement. For example, the second information may be one PPDU. For another example, the second information may be a plurality of PPDUs.

In a possible implementation, the first polarization direction and the second polarization direction may be used by the first device to send the second information. For example, the first polarization direction is used by the first device to send a first field of one PPDU, and the second polarization direction is used by the first device to send a second field of the PPDU. In other words, the first device may send the first field of the PPDU in the first polarization direction, and send the second field of the PPDU in the second polarization direction. For another example, the first polarization direction is used by the first device to send a first PPDU, and the second polarization direction is used by the first device to send a second PPDU. In other words, the first device may send the first PPDU in the first polarization direction, and send the second PPDU in the second polarization direction.

Therefore, the first device may send the second information in a polarization direction indicated by the second device. In this case, the second device may select, based on the polarization direction indicated by the first information, a polarization direction in which the second information is received, so that a sensing result in a co-polarization direction and a sensing result in a cross-polarization direction are obtained.

In another possible implementation, the first polarization direction and the second polarization direction are used by the second device to receive the second information. For example, the first polarization direction is used by the second device to receive a first field of one PPDU, and the second polarization direction is used by the second device to receive a second field of the PPDU. For another example, the first polarization direction is used by the second device to receive a first PPDU, and the second polarization direction is used by the second device to receive a second PPDU.

In this case, the second device may send, to the first device, the polarization direction in which the second information is received, and the first device may select, based on the polarization direction indicated by the first information, a polarization direction in which the second information is sent, so that a sensing result in a co-polarization direction and a sensing result in a cross-polarization direction are obtained.

It may be understood that, for an implementation of carrying the first information, refer to the embodiment shown in FIG. 2. Details are not described herein again. For example, the first information may be carried in a sensing measurement setup request (measurement setup request) or a sensing measurement setup response (measurement setup response). For another example, the first information may be carried in an instance request (instance request) or an instance response (instance response). Alternatively, the first information may be carried in header information of the PPDU. For example, the first information may be carried in header information of the foregoing PPDU. For another example, the first information may be carried in header information of the first PPDU or the second PPDU.

Based on the foregoing solutions, the second device may indicate, to the first device via the first information, the polarization direction in which the second information is received, and the first device may select, based on the first information, the polarization direction in which the second information is sent; or the second device may indicate, to the first device via the first information, the polarization direction in which the second information is sent, and the first device may send the second information based on the polarization direction indicated by the first information, so that the sensing result in the co-polarization direction and the sensing result in the cross-polarization direction may be obtained.

In embodiments shown in FIG. 2 and FIG. 6, the first device and the second device may exchange polarization direction information, so that the sensing result in the co-polarization direction and the sensing result in the cross-polarization direction are obtained. An embodiment of this application further provides another information transmission method. In the method, a first device may send second information in a fixed polarization direction. The following provides descriptions by using FIG. 7.

FIG. 7 is an example flowchart of an information transmission method according to an embodiment of this application. The method may include the following operations.

S701: The first device determines a first polarization direction and a second polarization direction.

The first polarization direction is different from the second polarization direction, and the first polarization direction and the second polarization direction are pre-defined or pre-configured. In other words, the polarization direction, a sending manner, or a polarization direction switch pattern that is used when the first device sends the second information may be pre-defined or pre-configured. In this way, when receiving the second information, a second device may select a corresponding polarization direction, receiving manner, or polarization direction switch pattern based on the pre-defined or pre-configured polarization direction, sending manner, or polarization direction switch pattern.

S702: The first device sends the second information to the second device.

Correspondingly, the second device receives the second information from the first device.

It may be understood that, for the second information, refer to the embodiment shown in FIG. 2. For example, the second information may be one PPDU. For another example, the second information may be a plurality of PPDUs.

In a possible case, the first polarization direction may be a polarization direction of a first field of one PPDU, and the second polarization direction may be a polarization direction of a second field of the PPDU. It may be understood that the first field and the second field may be TRN subfields. For example, the first field may be a 1^{st} TRN subfield to an (N/2)^{th} TRN subfield, and the second field may be an (N/2+1)^{th} TRN subfield to an N^{th} TRN subfield. N is an integer greater than or equal to 2. For another example, the first field may be a 1^{st} TRN subfield to an L^{th} TRN subfield, and the second field may be an (L+1)^{th} TRN subfield to a (2L)^{th} TRN subfield. L is an integer greater than or equal to 1.

In this way, when receiving the PPDU, the second device may select, based on the pre-defined or pre-configured first polarization direction and second polarization direction, a third polarization direction and a fourth polarization direction for receiving. For example, the second device may select the third polarization direction to receive the first field, and select the fourth polarization direction to receive the second field. The third polarization direction may be the same as the first polarization direction, and the fourth polarization direction may be different from the second polarization direction. Alternatively, the third polarization direction may be different from the first polarization direction, and the fourth polarization direction may be the same as the second polarization direction.

In other words, the second device may select, based on the pre-defined or pre-configured sending manner, a corresponding receiving manner to receive the foregoing PPDU, so that a sensing result in a co-polarization direction and a sensing result in a cross-polarization direction are obtained. In other words, the second device may select, based on the pre-defined or pre-configured polarization direction switch pattern, a corresponding polarization direction switch pattern to receive the foregoing PPDU, so that the sensing result in the co-polarization direction and the sensing result in the cross-polarization direction are obtained.

For example, it is assumed that the second information is one PPDU. When N=2, it is pre-defined or pre-configured that the first device sends the second information in an HV sending manner. In other words, the first device sends a first field of the PPDU in an H polarization direction, for example, the first device sends a 1^{st} TRN subfield of the PPDU in the H polarization direction; and the first device sends a second field of the PPDU in a V polarization direction, for example, the first device sends a 2^{nd} TRN subfield of the PPDU in the V polarization direction. In other words, when sending the PPDU, the first device switches from the H polarization direction to the V polarization direction.

In this case, the second device may select, based on the HV sending manner, an HH receiving manner to receive the second information. In other words, the second device may receive the first field of the PPDU in the H polarization direction, for example, the second device receives the 1^{st} TRN subfield of the PPDU in the H polarization direction; and the second device receives the second field of the PPDU in the H polarization direction, for example, the second device sends the 2^{nd} TRN subfield of the PPDU in the H polarization direction. In other words, when receiving one PPDU, the second device switches from the H polarization direction to the H polarization direction, that is, the polarization direction is not switched. In this way, the sensing result in the co-polarization direction (H-H) and the sensing result in the cross-polarization direction (V-H) may be obtained based on the polarization direction selected by the second device.

For another example, it is assumed that the second information is one PPDU. When L=1 and 2L=2, it is pre-defined or pre-configured that the first device sends the second information in an HV sending manner. In other words, the first device sends a first field of the PPDU in an H polarization direction, for example, the first device sends a 1^{st} TRN subfield of the PPDU in the H polarization direction; and the first device sends a second field of the PPDU in a V polarization direction, for example, the first device sends a 2^{nd} TRN subfield of the PPDU in the V polarization direction. In other words, when sending the PPDU, the first device switches from the H polarization direction to the V polarization direction.

In this case, the second device may select, based on the HV sending manner, an HH receiving manner to receive the second information. In other words, the second device may receive the first field of the PPDU in the H polarization direction, for example, the second device receives the 1^{st} TRN subfield of the PPDU in the H polarization direction; and the second device receives the second field of the PPDU in the H polarization direction, for example, the second device sends the 2^{nd} TRN subfield of the PPDU in the H polarization direction. In other words, when receiving one PPDU, the second device switches from the H polarization direction to the H polarization direction, that is, the polarization direction is not switched. In this way, the sensing result in the co-polarization direction (H-H) and the sensing result in the cross-polarization direction (V-H) may be obtained based on the polarization direction selected by the second device.

It may be understood that the foregoing is described by using the HV sending manner as an example. It is pre-defined or pre-configured that the first device may send the second information in an HV sending manner, a VH sending manner, an HH sending manner, or a VV sending manner. It should be noted that the first device can use only one of the four sending manners, that is, it is pre-defined or pre-configured that the first device can use only one of the HV sending manner, the VH sending manner, the HH sending manner, or the VV sending manner. Similarly, the foregoing is described by using the HH receiving manner as an example. It may be understood that the second device may select, based on the pre-defined or pre-configured sending manner of the first device, a receiving manner, to receive the second information, in which the sensing result in the co-polarization direction and the sensing result in the cross-polarization direction may be obtained. Details are not described in the following.

For another example, it is assumed that the second information is one PPDU. When N=4, it is pre-defined or pre-configured that the first device sends the second information in an HHVV sending manner. In other words, the first device sends a first field of the PPDU in an H polarization direction, for example, the first device sends a 1^{st} TRN subfield and a 2^{nd} TRN subfield of the PPDU in the H polarization direction; and the first device sends a second field of the PPDU in a V polarization direction, for example, the first device sends a 3^{rd} TRN subfield and a 4^{th} TRN subfield of the PPDU in the V polarization direction. In other words, when sending the PPDU, the first device switches from the H polarization direction to the V polarization direction.

In this case, the second device may select, based on the HHVV sending manner, an HVHV receiving manner to receive the second information. In other words, the second device may receive the first field of the PPDU in the H polarization direction, for example, the second device receives the 1^{st} TRN subfield and the 3^{rd} TRN subfield of the PPDU in the H polarization direction; and the second device receives the second field of the PPDU in the V polarization direction, for example, the second device sends the 2^{nd} TRN subfield and the 4^{th} TRN subfield of the PPDU in the H polarization direction. In this way, the sensing result in the co-polarization direction (H-H and V-V) and the sensing result in the cross-polarization direction (V-H and H-V) may be obtained based on the polarization direction selected by the second device.

For another example, it is assumed that the second information is one PPDU. When L=2 and 2L=4, it is pre-defined or pre-configured that the first device sends the second information in an HHVV sending manner. In other words, the first device sends a first field of the PPDU in an H polarization direction, for example, the first device sends a 1^{st} TRN subfield and a 2^{nd} TRN subfield of the PPDU in the H polarization direction; and the first device sends a second field of the PPDU in a V polarization direction, for example, the first device sends a 3^{rd} TRN subfield and a 4^{th} TRN subfield of the PPDU in the V polarization direction. In other words, when sending the PPDU, the first device switches from the H polarization direction to the V polarization direction.

In this case, the second device may select, based on the HHVV sending manner, an HVHV receiving manner to receive the second information. In other words, the second device may receive the first field of the PPDU in the H polarization direction, for example, the second device receives the 1^{st} TRN subfield and the 3^{rd} TRN subfield of the PPDU in the H polarization direction; and the second device receives the second field of the PPDU in the V polarization direction, for example, the second device sends the 2^{nd} TRN subfield and the 4^{th} TRN subfield of the PPDU in the H polarization direction. In this way, the sensing result in the co-polarization direction (H-H and V-V) and the sensing result in the cross-polarization direction (V-H and H-V) may be obtained based on the polarization direction selected by the second device.

For another example, it is assumed that the second information is one PPDU. When L=1 and 2L=2, it is pre-defined or pre-configured that the first device sends the second information in an HHVV sending manner. In other words, the first device sends a first field of the PPDU in an H polarization direction, for example, the first device sends a 1^{st} TRN subfield of the PPDU in the H polarization direction; the first device sends a second field of the PPDU in a V polarization direction, for example, the first device sends a 2^{nd} TRN subfield of the PPDU in the V polarization direction; the first device sends a third field of the PPDU in the H polarization direction, for example, the first device sends a 3^{rd} TRN subfield of the PPDU in the H polarization direction; and the first device sends a fourth field of the PPDU in the V polarization direction, for example, the first device sends a 4^{th} TRN subfield of the PPDU in the V polarization direction. In other words, when sending the PPDU, the first device switches from the H polarization direction to the V polarization direction.

In this case, the second device may select, based on the HVHV sending manner, an HHVV receiving manner to receive the second information. In other words, the second device may receive the first field of the PPDU in the H polarization direction, for example, the second device receives the 1^{st} TRN subfield and the 2^{nd} TRN subfield of the PPDU in the H polarization direction; and the second device receives the second field of the PPDU in the V polarization direction, for example, the second device sends the 3^{rd} TRN subfield and the 4^{th} TRN subfield of the PPDU in the H polarization direction. In this way, the sensing result in the co-polarization direction (H-H and V-V) and the sensing result in the cross-polarization direction (V-H and H-V) may be obtained based on the polarization direction selected by the second device.

It may be understood that the foregoing is described by using the HHVV sending manner and the HVHV sending manner as examples. It is pre-defined or pre-configured that the first device may send the second information in a plurality of sending manners. It should be noted that the first device can use only one of the plurality of sending manners, for example, it is pre-defined or pre-configured in the foregoing example that the first device can use only the HHVV sending manner to send the second information. Similarly, the foregoing is described by using the HVHV receiving manner as an example. It may be understood that the second device may select, based on the pre-defined or pre-configured sending manner of the first device, a receiving manner, to receive the second information, in which the sensing result in the co-polarization direction and the sensing result in the cross-polarization direction may be obtained. Details are not described in the following.

In another possible case, the first polarization direction may be a polarization direction of the first PPDU, and the second polarization direction may be a polarization direction of the second PPDU. It may be understood that a quantity of first PPDUs is not limited to 1, and a quantity of second PPDUs is also not limited to 1. For example, when a transmitter switches a polarization direction every N/2 PPDUs, the first PPDU may be a 1^{st} PPDU to an (N/2)^{th} PPDU, and the second PPDU may be an (N/2+1)^{th} PPDU to an N^{th} PPDU.

In this way, when receiving a plurality of PPDUs, the second device may select, based on the pre-defined or pre-configured first polarization direction and second polarization direction, a third polarization direction and a fourth polarization direction for receiving. For example, the second device may select the third polarization direction to receive the first PPDU, and select the fourth polarization direction to receive the second PPDU. The third polarization direction may be the same as the first polarization direction, and the fourth polarization direction may be different from the second polarization direction. Alternatively, the third polarization direction may be different from the first polarization direction, and the fourth polarization direction may be the same as the second polarization direction.

In other words, the second device may select, based on the pre-defined or pre-configured sending manner, a corresponding receiving manner to receive the plurality of PPDUs, so that the sensing result in the co-polarization direction and the sensing result in the cross-polarization direction are obtained. In other words, the second device may select, based on the pre-defined or pre-configured polarization direction switch pattern, a corresponding polarization direction switch pattern to receive the plurality of PPDUs, so that the sensing result in the co-polarization direction and the sensing result in the cross-polarization direction are obtained.

For example, it is assumed that the second information is a plurality of PPDUs. When N=2, it is pre-defined or pre-configured that the first device sends the second information in an HV sending manner. In other words, the first device sends a 1^{st} PPDU in an H polarization direction, and sends a 2^{nd} PPDU in the V polarization direction. In other words, when sending the PPDUs, the first device switches from the H polarization direction to the V polarization direction.

In this case, the second device may select, based on the HV sending manner, an HH receiving manner to receive the second information. In other words, the second device may receive the 1^{st} PPDU in the H polarization direction, and receives the 2^{nd} PPDU in the H polarization direction. In other words, when receiving the plurality of PPDUs, the second device switches from the H polarization direction to the H polarization direction, that is, the polarization direction is not switched. In this way, the sensing result in the co-polarization direction (H-H) and the sensing result in the cross-polarization direction (V-H) may be obtained based on the polarization direction selected by the second device.

For another example, it is assumed that the second information is a plurality of PPDUs. When N=4, it is pre-defined or pre-configured that the first device sends the second information in an HHVV sending manner. In other words, the first device sends the first PPDU in an H polarization direction, for example, a 1^{st} PPDU and a 2^{nd} PPDU; and the first device sends the second PPDU in the V polarization direction, for example, a 3^{rd} PPDU and a 4^{th} PPDU. In other words, when sending the PPDUs, the first device switches from the H polarization direction to the V polarization direction.

In this case, the second device may select, based on the HHVV sending manner, an HVHV receiving manner to receive the second information. In other words, the second device may receive the first PPDU in the H polarization direction, for example, the 1^{st} PPDU and the 3^{rd} PPDU; and the second device receives the second PPDU in the H polarization direction, for example, the 2^{nd} PPDU and the 4^{th} PPDU. In this way, the sensing result in the co-polarization direction (H-H and V-V) and the sensing result in the cross-polarization direction (V-H and H-V) may be obtained based on the polarization direction selected by the second device.

It should be noted that the foregoing is described by using examples in which N=2 and N=4. When N is an integer greater than or equal to 2, the sending manner in which the first device sends the second information may also be pre-defined or pre-configured, and when receiving the second information, the second device may select a corresponding receiving manner, so that the sensing result in the co-polarization direction and the sensing result in the cross-polarization direction are obtained.

Based on the technical solutions shown in FIG. 7, the manner in which the first device sends the second information may be pre-defined or pre-configured, so that the second device selects a receiving manner to receive the second information, to obtain the sensing result in the co-polarization direction and the sensing result in the cross-polarization direction.

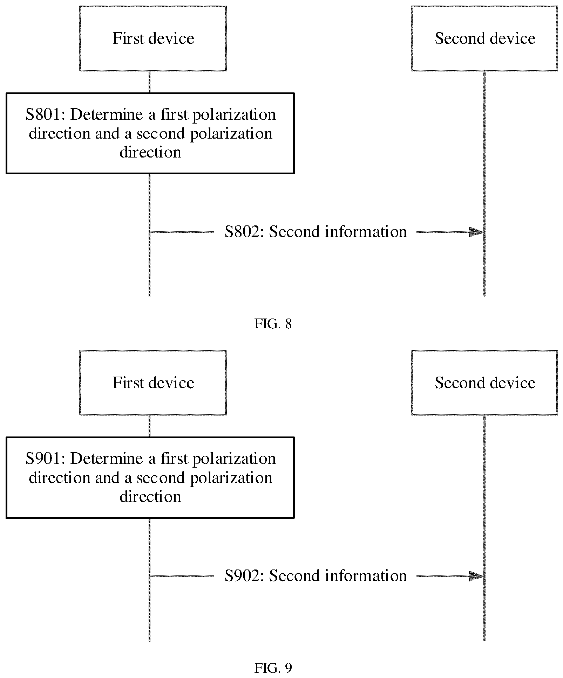

FIG. 8 shows an embodiment in which the sending manner of the first device is specified in the pre-defined or pre-configured manner. An embodiment of this application further provides another information transmission method. In the method, a receiving manner of a second device may be pre-defined or pre-configured. In other words, a third polarization direction and a fourth polarization direction in which the second device receives second information may be pre-defined or pre-configured. In other words, a polarization direction in which the second device receives the second information may be pre-defined or pre-configured.

FIG. 8 is an example flowchart of an information transmission method according to an embodiment of this application. The method may include the following operations. It may be understood that an embodiment shown in FIG. 8 may be implemented separately, or may be implemented in combination with the embodiment shown in FIG. 7. In other words, the receiving manner of the second device may be pre-defined or pre-configured. Alternatively, a sending manner of a first device and the receiving manner of the second device may be pre-defined or pre-configured, so that the second information is received in the receiving manner in which a sensing result in a co-polarization direction and a sensing result in a cross-polarization direction are obtained.

S801: The first device determines a first polarization direction and a second polarization direction.

S802: The first device sends the second information to the second device.

Correspondingly, the second device receives the second information from the first device.

It may be understood that, for the second information, refer to the embodiment shown in FIG. 2. For example, the second information may be one PPDU. For another example, the second information may be a plurality of PPDUs.

In a possible implementation, the second device may determine the third polarization direction and the fourth polarization direction. The third polarization direction is different from the fourth polarization direction, and the third polarization direction and the fourth polarization direction are pre-defined or pre-configured. In other words, a polarization direction, a receiving manner, or a polarization direction switch pattern that is used when the second device receives the second information may be pre-defined or pre-configured. In this way, when sending the second information, the first device may select a corresponding polarization direction, sending manner, or polarization direction switch pattern based on the pre-defined or pre-configured polarization direction, receiving manner, or polarization direction switch pattern.

In a possible implementation, the third polarization direction may be a polarization direction in which the second device receives a first field of one PPDU, and the fourth polarization direction may be a polarization direction in which the second device receives a second field of the PPDU. It may be understood that the first field and the second field may be TRN subfields. For example, the first field may be a 1^{st} TRN subfield to an (N/2)^{th} TRN subfield, and the second field may be an (N/2+1)^{th} TRN subfield to an N^{th} TRN subfield. N is an integer greater than or equal to 2. For another example, the first field may be a 1^{st} TRN subfield to an L^{th} TRN subfield, and the second field may be an (L+1)^{th} TRN subfield to a (2L)^{th} TRN subfield. L is an integer greater than or equal to 1.

In this way, when sending the PPDU, the first device may select, based on the pre-defined or pre-configured third polarization direction and fourth polarization direction, the first polarization direction and the second polarization direction for sending. For example, the first device may select the first polarization direction to send the first field, and select the second polarization direction to send the second field. The first polarization direction may be the same as the third polarization direction, and the second polarization direction may be different from the fourth polarization direction. Alternatively, the first polarization direction may be different from the third polarization direction, and the second polarization direction may be the same as the fourth polarization direction.

In other words, the first device may select, based on the pre-defined or pre-configured receiving manner, a corresponding sending manner to send the foregoing PPDU, so that a sensing result in a co-polarization direction and a sensing result in a cross-polarization direction are obtained. In other words, the first device may select, based on the pre-defined or pre-configured polarization direction switch pattern, a corresponding polarization direction switch pattern to send the foregoing PPDU, so that the sensing result in the co-polarization direction and the sensing result in the cross-polarization direction are obtained.

For example, it is assumed that the second information is one PPDU. When N=2, it is pre-defined or pre-configured that the second device sends the second information in an HV receiving manner. In other words, the second device receives a first field of the PPDU in an H polarization direction, for example, a 1^{st} TRN subfield; and the second device receives a second field of the PPDU in a V polarization direction, for example, a 2^{nd} TRN subfield. In other words, when receiving the PPDU, the second device switches from the H polarization direction to the V polarization direction.

In this case, the first device may select, based on the HV receiving manner, an HH sending manner to send the second information. In other words, the first device may send the first field of the PPDU in the H polarization direction, for example, the 1^{st} TRN subfield; and the first device sends the second field of the PPDU in the H polarization direction, for example, the 2^{nd} TRN subfield. In other words, when sending one PPDU, the first device switches from the H polarization direction to the H polarization direction, that is, the polarization direction is not switched. In this way, the sensing result in the co-polarization direction (H-H) and the sensing result in the cross-polarization direction (H-V) may be obtained based on the polarization direction selected by the first device.

For example, it is assumed that the second information is one PPDU. When L= 1 and 2L=2, it is pre-defined or pre-configured that the second device sends the second information in an HV receiving manner. In other words, the second device receives a first field of the PPDU in an H polarization direction, for example, a 1^{st} TRN subfield; and the second device receives a second field of the PPDU in a V polarization direction, for example, a 2^{nd} TRN subfield. In other words, when receiving the PPDU, the second device switches from the H polarization direction to the V polarization direction.

In this case, the first device may select, based on the HV receiving manner, an HH sending manner to send the second information. In other words, the first device may send the first field of the PPDU in the H polarization direction, for example, the 1^{st} TRN subfield; and the first device sends the second field of the PPDU in the H polarization direction, for example, the 2^{nd} TRN subfield. In other words, when sending one PPDU, the first device switches from the H polarization direction to the H polarization direction, that is, the polarization direction is not switched. In this way, the sensing result in the co-polarization direction (H-H) and the sensing result in the cross-polarization direction (H-V) may be obtained based on the polarization direction selected by the first device.

It may be understood that the foregoing is described by using the HV receiving manner as an example. It is pre-defined or pre-configured that the second device may receive the second information in the HV receiving manner, a VH receiving manner, an HH receiving manner, or a VV receiving manner. It should be noted that the second device can use only one of the four receiving manners, that is, it is pre-defined or pre-configured that the second device can use only one of the HV receiving manner, the VH receiving manner, the HH receiving manner, or the VV receiving manner. Similarly, the foregoing is described by using the HH sending manner as an example. It may be understood that the first device may select, based on the pre-defined or pre-configured receiving manner of the second device, a sending manner, to send the second information, in which the sensing result in the co-polarization direction and the sensing result in the cross-polarization direction may be obtained. Details are not described in the following.

For another example, it is assumed that the second information is one PPDU. When N=4, it is pre-defined or pre-configured that the second device receives the second information in an HHVV receiving manner. In other words, the second device receives a first field of the PPDU in an H polarization direction, for example, a 1^{st} TRN subfield and a 2^{nd} TRN subfield; and the second device receives a second field of the PPDU in a V polarization direction, for example, a 3^{rd} TRN subfield and a 4^{th} TRN subfield. In other words, when receiving the PPDU, the second device switches from the H polarization direction to the V polarization direction.

In this case, the first device may select, based on the HHVV receiving manner, an HVHV sending manner to send the second information. In other words, the first device may send the first field of the PPDU in the H polarization direction, for example, the 1^{st} TRN subfield and the 3^{rd} TRN subfield; and the first device sends the second field of the PPDU in the V polarization direction, for example, the 2^{nd} TRN subfield and the 4^{th} TRN subfield. In this way, the sensing result in the co-polarization direction (H-H and V-V) and the sensing result in the cross-polarization direction (V-H and H-V) may be obtained based on the polarization direction selected by the first device.

For another example, it is assumed that the second information is one PPDU. When L=2 and 2L=4, it is pre-defined or pre-configured that the second device receives the second information in an HHVV receiving manner. In other words, the second device receives a first field of the PPDU in an H polarization direction, for example, a 1^{st} TRN subfield and a 2^{nd} TRN subfield; and the second device receives a second field of the PPDU in a V polarization direction, for example, a 3^{rd} TRN subfield and a 4^{th} TRN subfield. In other words, when receiving the PPDU, the second device switches from the H polarization direction to the V polarization direction.

In this case, the first device may select, based on the HHVV receiving manner, an HVHV sending manner to send the second information. In other words, the first device may send the first field of the PPDU in the H polarization direction, for example, the 1^{st} TRN subfield and the 3^{rd} TRN subfield; and the first device sends the second field of the PPDU in the V polarization direction, for example, the 2^{nd} TRN subfield and the 4^{th} TRN subfield. In this way, the sensing result in the co-polarization direction (H-H and V-V) and the sensing result in the cross-polarization direction (V-H and H-V) may be obtained based on the polarization direction selected by the first device.

It may be understood that the foregoing is described by using the HHVV receiving manner as an example. It is pre-defined or pre-configured that the second device may receive the second information in a plurality of receiving manners. It should be noted that the second device can use only one of the plurality of receiving manners, for example, it is pre-defined or pre-configured in the foregoing example that the second device can use only the HHVV receiving manner to receive the second information. Similarly, the foregoing is described by using the HVHV sending manner as an example. It may be understood that the first device may select, based on the pre-defined or pre-configured receiving manner of the second device, a receiving manner, to receive the second information, in which the sensing result in the co-polarization direction and the sensing result in the cross-polarization direction may be obtained. Details are not described in the following.

In another possible case, the first polarization direction may be a polarization direction of the first PPDU, and the second polarization direction may be a polarization direction of the second PPDU. It may be understood that a quantity of first PPDUs is not limited to 1, and a quantity of second PPDUs is also not limited to 1. For example, when a transmitter switches a polarization direction every N/2 PPDUs, the first PPDU may be a 1^{st} PPDU to an (N/2)^{th} PPDU, and the second PPDU may be an (N/2+1)^{th} PPDU to an N^{th} PPDU.

In this way, when sending the plurality of PPDUs, the first device may select, based on the pre-defined or pre-configured third polarization direction and fourth polarization direction, the first polarization direction and the second polarization direction for sending. For example, the first device may select the first polarization direction to send the first PPDU, and select the second polarization direction to send the second PPDU. The first polarization direction may be the same as the third polarization direction, and the second polarization direction may be different from the fourth polarization direction. Alternatively, the first polarization direction may be different from the third polarization direction, and the second polarization direction may be the same as the fourth polarization direction.

In other words, the first device may select, based on the pre-defined or pre-configured receiving manner, a corresponding sending manner to send the plurality of PPDUs, so that a sensing result in a co-polarization direction and a sensing result in a cross-polarization direction are obtained. In other words, the first device may select, based on the pre-defined or pre-configured polarization direction switch pattern, a corresponding polarization direction switch pattern to send the plurality of PPDUs, so that the sensing result in the co-polarization direction and the sensing result in the cross-polarization direction are obtained.

For example, it is assumed that the second information is a plurality of PPDUs. When N=2, it is pre-defined or pre-configured that the second device receives the second information in an HV receiving manner. In other words, the second device receives a 1^{st} PPDU in an H polarization direction, and receives a 2^{nd} PPDU in the V polarization direction. In other words, when receiving the PPDUs, the second device switches from the H polarization direction to the V polarization direction.

In this case, the first device may select, based on the HV receiving manner, an HH sending manner to send the second information. In other words, the first device may send the 1^{st} PPDU in the H polarization direction, and send the 2^{nd} PPDU in the H polarization direction. In other words, when sending the plurality of PPDUs, the first device switches from the H polarization direction to the H polarization direction, that is, the polarization direction is not switched. In this way, the sensing result in the co-polarization direction (H-H) and the sensing result in the cross-polarization direction (V-H) may be obtained based on the polarization direction selected by the first device.

For another example, it is assumed that the second information is a plurality of PPDUs. When N=4, it is pre-defined or pre-configured that the second device receives the second information in an HHVV receiving manner. In other words, the second device receives the first PPDU in an H polarization direction, for example, a 1^{st} PPDU and a 2^{nd} PPDU; and the second device receives a second PPDU in the V polarization direction, for example, a 3^{rd} PPDU and a 4^{th} PPDU. In other words, when receiving the PPDUs, the second device switches from the H polarization direction to the V polarization direction.

In this case, the first device may select, based on the HHVV receiving manner, an HVHV sending manner to send the second information. In other words, the first device may send the first PPDU in the H polarization direction, for example, the 1^{st} PPDU and the 3^{rd} PPDU; and the first device sends the second PPDU in the H polarization direction, for example, the 2^{nd} PPDU and the 4^{th} PPDU. In this way, the sensing result in the co-polarization direction (H-H and V-V) and the sensing result in the cross-polarization direction (V-H and H-V) may be obtained based on the polarization direction selected by the first device.

It should be noted that the foregoing is described by using examples in which N=2 and N=4. When N is an integer greater than or equal to 2, the receiving manner in which the second device receives the second information may also be pre-defined or pre-configured, and when sending the second information, the first device may select a corresponding sending manner, so that the sensing result in the co-polarization direction and the sensing result in the cross-polarization direction are obtained.

Based on the technical solutions shown in FIG. 8, the manner in which the second device receives the second information may be pre-defined or pre-configured, so that the first device selects a sending manner to send the second information, to obtain the sensing result in the co-polarization direction and the sensing result in the cross-polarization direction.

In embodiments shown in FIG. 7 and FIG. 8, the sensing result in the co-polarization direction and the sensing result in the cross-polarization direction are obtained based on the technical solutions in which the receiving manner/sending manner is pre-defined or pre-configured. An embodiment of this application further provides another information transmission method. In the method, a behavior of sending second information by a first device may be specified. In a related technology, when N is an even number, the first device switches a polarization direction after sending N/2 TRN subfields. In the information transmission method provided in this embodiment of this application, the first device may switch the polarization direction after N/4 TRN subfields, or switch the polarization direction every TRN subfield. The following provides descriptions by using FIG. 9.

FIG. 9 is an example flowchart of an information transmission method according to an embodiment of this application. The method may include the following operations.

S901: The first device determines a first polarization direction and a second polarization direction.

The first polarization direction is different from the second polarization direction.

S902: The first device sends the second information to a second device.

Correspondingly, the second device receives the second information from the first device.

It may be understood that, for the second information, refer to the embodiment shown in FIG. 2. For example, the second information may be one PPDU. For another example, the second information may be a plurality of PPDUs.

In a possible case, it is assumed that the second information is one PPDU. Polarization directions of a 1^{st} field to an (N/4)^{th} field of the PPDU are the first polarization direction, polarization directions of an (N/4+1)^{th} field to an (N/2)^{th} field are the second polarization direction, polarization directions of an (N/2+1)^{th} field to a (3N/4)^{th} field are the first polarization direction, and polarization directions of a (3N/4+1)^{th} field to an N^{th} field are the second polarization direction, where N is an integer greater than or equal to 2, for example, N may be an integer multiple of 4. In other words, the first device switches a polarization direction once every N/4 fields of the PPDU.

Because the second device switches a polarization direction after N/2 TRN subfields, regardless of a polarization direction in which the second device receives the 1^{st} field to the N^{th} field, a sensing result in a co-polarization direction and a sensing result in a cross-polarization direction may be obtained.

For example, it is assumed that the second information is one PPDU. When N=4, the first device switches the polarization manner after N/4=1 TRN subfield. Without loss of generality, it is assumed that the first polarization direction is an H polarization direction, and the second polarization direction is a V polarization direction. In other words, the first device may send the 1^{st} TRN subfield of the PPDU in the H polarization direction. Because the first device switches the polarization manner after one TRN subfield, the first device sends a 2^{nd} TRN subfield of the PPDU in the V polarization direction. The rest is deduced by analogy. The first device may send the PPDU to the second device in an HVHV polarization direction.

It is assumed that the second device receives the PPDU in an HHVV polarization direction. Therefore, the sensing result in the co-polarization direction (H-H and V-V) and the sensing result in the cross-polarization direction (H-V and V-H) may be obtained. For another example, it is assumed that the second device receives the PPDU in a VVHH polarization direction. Therefore, the sensing result in the cross-polarization direction (H-V and V-H) and the sensing result in the co-polarization direction (V-V and H-H) may be obtained.

In another possible case, it is assumed that the second information is a plurality of PPDUs. Polarization directions of a 1^{st} PPDU to an (N/4)^{th} PPDU in the plurality of PPDUs are the first polarization direction, polarization directions of an (N/4+1)^{th} PPDU to an (N/2)^{th} PPDU are the second polarization direction, polarization directions of an (N/2+1)^{th} PPDU to a (3N/4)^{th} PPDU are the first polarization direction, and polarization directions of a (3N/4+1)^{th} PPDU to an N^{th} PPDU are the second polarization direction, where N is an integer greater than or equal to 2, for example, N may be an integer multiple of 4. In other words, the first device switches a polarization direction once every N/4 PPDUs.

Because the second device switches a polarization direction after N/2 PPDUs, regardless of a polarization direction in which the second device receives the plurality of PPDUs, the sensing result in the co-polarization direction and the sensing result in the cross-polarization direction may be obtained.

For example, it is assumed that the second information is a plurality of PPDUs. When N=4, the first device switches the polarization manner after N/4=1 PPDU. Without loss of generality, it is assumed that the first polarization direction is an H polarization direction, and the second polarization direction is a V polarization direction. In other words, the first device may send a 1^{st} PPDU in the H polarization direction. Because the first device switches the polarization manner after one PPDU, the first device sends a 2^{nd} PPDU in the V polarization direction. The rest is deduced by analogy. The first device may send the plurality of PPDUs to the second device in an HVHV polarization direction.

It is assumed that the second device receives the plurality of PPDUs in an HHVV polarization direction. Therefore, the sensing result in the co-polarization direction (H-H and V-V) and the sensing result in the cross-polarization direction (H-V and V-H) may be obtained. For another example, it is assumed that the second device receives the PPDU in a VVHH polarization direction. Therefore, the sensing result in the cross-polarization direction (H-V and V-H) and the sensing result in the co-polarization direction (V-V and H-H) may be obtained.

It may be understood that the foregoing is described by using an example in which N=4. When N is an integer greater than or equal to 2, the first device may also switch the polarization direction after N/4 fields or PPDUs.

In embodiments of this application, the first device may alternatively switch the polarization direction once every field of the PPDU. In a possible case, it is assumed that the second information is one PPDU. A polarization direction of an n^{th} field of the PPDU is the first polarization direction, and a polarization direction of an (n+1)^{th} field is the second polarization direction, where n is greater than or equal to 1 and less than or equal to N. For example, n may range from 1 to N. N is an integer greater than or equal to 2. In other words, the first device switches the polarization direction once every field of the PPDU.

Because the second device switches the polarization direction after N/2 TRN subfields, regardless of a polarization direction in which the second device receives the PPDU, the sensing result in the co-polarization direction and the sensing result in the cross-polarization direction may be obtained.

For example, it is assumed that the second information is one PPDU. When N=4, the first device switches the polarization manner every TRN subfield. Without loss of generality, it is assumed that the first polarization direction is an H polarization direction, and the second polarization direction is a V polarization direction. In other words, the first device may send a 1^{st} TRN subfield of the PPDU in the H polarization direction. Because the first device switches the polarization manner every TRN subfield, the first device sends a 2^{nd} TRN subfield of the PPDU in the V polarization direction, sends a 3^{rd} TRN subfield of the PPDU in the H polarization direction, and sends a 4^{th} TRN subfield of the PPDU in the V polarization direction.

It is assumed that the second device receives the PPDU in an HHVV polarization direction. Therefore, the sensing result in the co-polarization direction (H-H and V-V) and the sensing result in the cross-polarization direction (H-V and V-H) may be obtained. For another example, it is assumed that the second device receives the PPDU in a VVHH polarization direction. Therefore, the sensing result in the cross-polarization direction (H-V and V-H) and the sensing result in the co-polarization direction (V-V and H-H) may be obtained.

In another possible case, it is assumed that the second information is a plurality of PPDUs. A polarization direction of an n^{th} PPDU in the plurality of PPDUs is the first polarization direction, and a polarization direction of an (n+1)^{th} PPDU is the second polarization direction, where n is greater than or equal to 1 and less than or equal to N. For example, n may range from 1 to N. N is an integer greater than or equal to 2. In other words, the first device switches the polarization direction once every PPDU.

For example, it is assumed that the second information is a plurality of PPDUs. When N=4, the first device switches the polarization manner every PPDU. Without loss of generality, it is assumed that the first polarization direction is an H polarization direction, and the second polarization direction is a V polarization direction. In other words, the first device may send a 1^{st} PPDU in the H polarization direction. Because the first device switches the polarization manner every PPDU, the first device sends a 2^{nd} PPDU in the V polarization direction, sends a 3^{rd} PPDU in the H polarization direction, and sends a 4^{th} PPDU in the V polarization direction.

It is assumed that the second device receives the four PPDUs in an HHVV polarization direction. Therefore, the sensing result in the co-polarization direction (H-H and V-V) and the sensing result in the cross-polarization direction (H-V and V-H) may be obtained. For another example, it is assumed that the second device receives the PPDU in a VV polarization direction. Therefore, the sensing result in the cross-polarization direction (H-V and V-H) and the sensing result in the co-polarization direction (V-V and H-H) may be obtained.

It may be understood that the foregoing is described by using an example in which N=4. When N is an integer greater than or equal to 2, the first device may also switch the polarization direction every field or PPDU.

Based on the solutions shown in FIG. 9, the behavior of sending the second information by the first device is changed, to obtain the sensing result in the cross-polarization direction and the sensing result in the co-polarization direction.

It should be noted that an embodiment shown in FIG. 9 may be implemented separately, or may be implemented in combination with embodiments shown in FIG. 2, FIG. 6, FIG. 7, and FIG. 8.

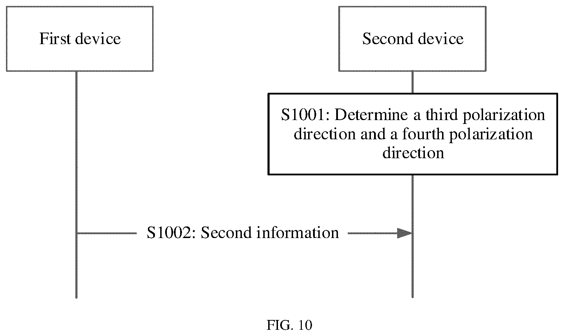

In the embodiment shown in FIG. 9, the behavior of sending the second information by the first device is changed. An embodiment of this application further provides another information transmission method. In the method, a behavior of receiving second information by a second device may be changed. In a related technology, when N is an even number, the second device switches a polarization direction after sending N/2 TRN subfields. In the information transmission method provided in this embodiment of this application, the second device may switch the polarization direction after N/4 TRN subfields, or switch the polarization direction every TRN subfield. The following provides descriptions by using FIG. 10.

FIG. 10 is an example flowchart of an information transmission method according to an embodiment of this application. The method may include the following operations.

S1001: The second device determines a third polarization direction and a fourth polarization direction.

S1002: A first device sends the second information to the second device.

Correspondingly, the second device receives the second information from the first device.

It may be understood that, for the second information, refer to the embodiment shown in FIG. 2. For example, the second information may be one PPDU. For another example, the second information may be a plurality of PPDUs.

In a possible case, it is assumed that the second information is one PPDU. Polarization directions in which the second device receives a 1^{st} field to an (N/4)^{th} field of the PPDU are a first polarization direction, polarization directions in which an (N/4+1)^{th} field to an (N/2)^{th} field are received are a second polarization direction, polarization directions in which an (N/2+1)^{th} field to a (3N/4)^{th} field are received are the first polarization direction, and polarization directions in which a (3N/4+1)^{th} field to an N^{th} field are received are the second polarization direction, where N is an integer greater than or equal to 2, for example, N may be an integer multiple of 4. In other words, the second device switches a polarization direction once every N/4 fields of the PPDU.

Because the first device switches a polarization direction after N/2 TRN subfields, regardless of a polarization direction in which the first device sends the N fields, a sensing result in a co-polarization direction and a sensing result in a cross-polarization direction may be obtained.

For example, it is assumed that the second information is one PPDU. When N=4, the second device switches the polarization manner after N/4=1 TRN subfield. Without loss of generality, it is assumed that the third polarization direction is an H polarization direction, and the fourth polarization direction is a V polarization direction. In other words, the second device may receive a 1^{st} TRN subfield of the PPDU in the H polarization direction. Because the second device switches the polarization manner after one TRN subfield, the second device receives a 2^{nd} TRN subfield of the PPDU in the V polarization direction. The rest is deduced by analogy. The second device may receive a plurality of fields of the PPDU from the first device in an HVHV polarization direction.

It is assumed that the first device sends the plurality of fields of the PPDU in an HHVV polarization direction. Therefore, the sensing result in the co-polarization direction (H-H and V-V) and the sensing result in the cross-polarization direction (H-V and V-H) may be obtained. For another example, it is assumed that the first device sends the plurality of fields of the PPDU in a VVHH polarization direction. Therefore, the sensing result in the cross-polarization direction (H-V and V-H) and the sensing result in the co-polarization direction (V-V and H-H) may be obtained.

In another possible case, it is assumed that the second information is a plurality of PPDUs. Polarization directions in which the second device receives a 1^{st} PPDU to an (N/4)^{th} PPDU in the plurality of PPDUs are the first polarization direction, polarization directions in which an (N/4+1)^{th} PPDU to an (N/2)^{th} PPDU are received are the second polarization direction, polarization directions in which an (N/2+1)^{th} PPDU to a (3N/4)^{th} PPDU are received are the first polarization direction, and polarization directions in which a (3N/4+1)^{th} PPDU to an N^{th} PPDU are received are the second polarization direction, where N is an integer greater than or equal to 2, for example, N may be an integer multiple of 4. In other words, the second device switches the polarization direction once every N/4 PPDUs.

For example, it is assumed that the second information is a plurality of PPDUs. When N=4, the second device switches the polarization manner after N/4=1 PPDU. Without loss of generality, it is assumed that the first polarization direction is an H polarization direction, and the second polarization direction is a V polarization direction. In other words, the second device may receive a 1^{st} PPDU in the H polarization direction. Because the second device switches the polarization manner after one PPDU, the second device receives a 2^{nd} PPDU in the V polarization direction. The rest is deduced by analogy. The second device may receive the plurality of PPDUs from the first device in an HVHV polarization direction.

It is assumed that the first device sends the plurality of PPDUs in an HHVV polarization direction. Therefore, the sensing result in the co-polarization direction (H-H and V-V) and the sensing result in the cross-polarization direction (H-V and V-H) may be obtained. For another example, it is assumed that the first device sends the PPDUs in a VVHH polarization direction. Therefore, the sensing result in the cross-polarization direction (H-V and V-H) and the sensing result in the co-polarization direction (V-V and H-H) may be obtained.

It may be understood that the foregoing is described by using an example in which N=4. When N is an integer greater than or equal to 2, the second device may also switch the polarization direction after N/4 fields or PPDUs.

In embodiments of this application, the second device may alternatively switch the polarization direction once every field of the PPDU. In a possible case, it is assumed that the second information is one PPDU. A polarization direction in which the second device receives an n^{th} field of the PPDU is the third polarization direction, and a polarization direction in which the second device receives an (n+1)^{th} field is the fourth polarization direction, where n is greater than or equal to 1 and less than or equal to N. For example, n may range from 1 to N. N is an integer greater than or equal to 2. In other words, the second device switches the polarization direction every field of the PPDU.

Because the first device switches a polarization direction after N/2 TRN subfields, regardless of a polarization direction in which the first device sends the PPDU, the sensing result in the co-polarization direction and the sensing result in the cross-polarization direction may be obtained.

For example, it is assumed that the second information is one PPDU. When N=4, the second device switches the polarization manner every TRN subfield. Without loss of generality, it is assumed that the first polarization direction is an H polarization direction, and the second polarization direction is a V polarization direction. In other words, the second device may receive a 1^{st} TRN subfield of the PPDU in the H polarization direction. Because the second device switches the polarization manner every TRN subfield, the second device receives a 2^{nd} TRN subfield of the PPDU in the V polarization direction, receives a 3^{rd} TRN subfield of the PPDU in the H polarization direction, and receives a 4^{th} TRN subfield of the PPDU in the V polarization direction.

It is assumed that the first device sends the PPDU in an HHVV polarization direction. Therefore, the sensing result in the co-polarization direction (H-H and V-V) and the sensing result in the cross-polarization direction (H-V and V-H) may be obtained. For another example, it is assumed that the first device sends the PPDU in a VVHH polarization direction. Therefore, the sensing result in the cross-polarization direction (H-V and V-H) and the sensing result in the co-polarization direction (V-V and H-H) may be obtained.

In another possible case, it is assumed that the second information is a plurality of PPDUs. A polarization direction in which the second device receives an n^{th} PPDU in the plurality of PPDUs is the third polarization direction, and a polarization direction in which the second device receives an (n+1)^{th} PPDU is the fourth polarization direction, where n is greater than or equal to 1 and less than or equal to N. For example, n may range from 1 to N. N is an integer greater than or equal to 2. In other words, the second device switches the polarization direction every one of the PPDUs.

Because the first device switches a polarization direction after N/2 PPDUs, regardless of a polarization direction in which the first device sends the plurality of PPDUs, the sensing result in the co-polarization direction and the sensing result in the cross-polarization direction may be obtained.

For example, it is assumed that the second information is a plurality of PPDUs. When N=4, the second device switches the polarization manner every PPDU. Without loss of generality, it is assumed that the first polarization direction is an H polarization direction, and the second polarization direction is a V polarization direction. In other words, the second device may receive a 1^{st} PPDU in the H polarization direction. Because the second device switches the polarization manner every PPDU, the second device receives a 2^{nd} PPDU in the V polarization direction, receives a 3^{rd} PPDU in the H polarization direction, and receives a 4^{th} PPDU in the V polarization direction.

It is assumed that the first device sends the four PPDUs in an HHVV polarization direction. Therefore, the sensing result in the co-polarization direction (H-H) and the sensing result in the cross-polarization direction (H-V and V-H) may be obtained. For another example, it is assumed that the first device sends the PPDUs in a VVHH polarization direction. Therefore, the sensing result in the cross-polarization direction (H-V and V-H) and the sensing result in the co-polarization direction (V-V and H-H) may be obtained.

It may be understood that the foregoing is described by using an example in which N=4. When N is an integer greater than or equal to 2, the second device may also switch the polarization direction every field or PPDU.

Based on the solutions shown in FIG. 10, the behavior of receiving the second information by the second device is changed, to obtain the sensing result in the cross-polarization direction and the sensing result in the co-polarization direction.

It should be noted that an embodiment shown in FIG. 10 may be implemented separately, or may be implemented in combination with embodiments shown in FIG. 2, FIG. 6, FIG. 7, FIG. 8, and FIG. 9.

In embodiments shown in FIG. 2 to FIG. 10, the first device and the second device exchange polarization information, so that the sensing result in the cross-polarization direction and the sensing result in the co-polarization direction are obtained. In embodiments of this application, after obtaining the sensing results, a sensing receiver may send the sensing results in different polarization directions to a sensing transmitter. The following describes a manner in which the sensing receiver sends the sensing results in different polarization directions to the sensing transmitter in embodiments of this application.

In a possible implementation, when sending the sensing results, the sensing receiver may add, to a DMG sensing report frame, the sensing results that are in different polarization directions and that are obtained through measurement. For example, the sensing receiver may add a field to the sensing report frame, for example, a sensing report polarization (sensing report polarization) field, to identify a polarization manner of a sensing result in the DMG sensing report frame.

For example, in a linear polarization scenario, when the sensing report polarization field is 0 (or another reserved value), it indicates that the sensing report carried in the DMG sensing report frame does not determine polarization information of the sensing report. When the sensing report polarization field is 1, it indicates that a polarization direction of the sensing report carried in the DMG sensing report frame is H-H. When the sensing report polarization field is 2, it indicates that the polarization direction of the sensing report carried in the DMG sensing report frame is H-V. When the sensing report polarization field is 3, it indicates that the polarization direction of the sensing report carried in the DMG sensing report frame is V-V. When the sensing report polarization field is 4, it indicates that the polarization direction of the sensing report carried in the DMG sensing report frame is V-H.

For example, in a circular polarization scenario, when the sensing report polarization field is 0 (or another reserved value), it indicates that the sensing report carried in the DMG sensing report frame does not determine polarization information of the sensing report. When the sensing report polarization field is 1, it indicates that a polarization direction of the sensing report carried in the DMG sensing report frame is LH-LH. When the sensing report polarization field is 2, it indicates that a polarization direction of the sensing report carried in the DMG sensing report frame is LH-RH. When the sensing report polarization field is 3, it indicates that a polarization direction of the sensing report carried in the DMG sensing report frame is RH-RH. When the sensing report polarization field is 4, it indicates that a polarization direction of the sensing report carried in the DMG sensing report frame is RH-LH.

In a possible case, the DMG sensing report frame may include a DMG sensing report element, and the DMG sensing report element may carry the sensing result. The sensing receiver may add the sensing report polarization field to the DMG sensing report element. The sensing report polarization field may indicate that a polarization direction of the sensing result in the DMG sensing report element.

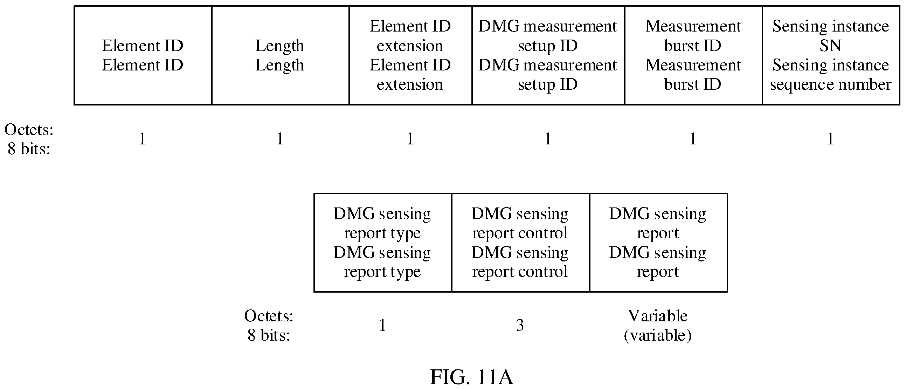

FIG. 11A shows a structure of a DMG sensing report element. The DMG sensing report element may include fields shown in FIG. 11A. The added sensing report polarization field may be placed at any location in the DMG sensing report element, for example, directly placed in the DMG sensing report element, or placed in a DMG sensing measurement report type field as a subfield, or placed in a DMG sensing report control field as a subfield, or placed in a DMG sensing report field as a subfield. This is not specifically limited in this application.

It should be noted that a name (sensing report polarization) of the foregoing field is merely shown as an example, and is not intended to limit the field. The field may indicate the polarization manner of the sensing result. In addition, a location of the sensing measurement polarization field is merely shown as an example. The field may be located after a sensing measurement setup ID and before a sensing measurement burst ID, or after a sensing measurement burst ID and before a measurement instance sequence number, or even before a sensing measurement setup ID. This is not specifically limited in this application. Alternatively, the field may be carried as a subfield in any one or more of the sensing measurement setup ID, the sensing measurement burst ID, and the measurement instance sequence number.

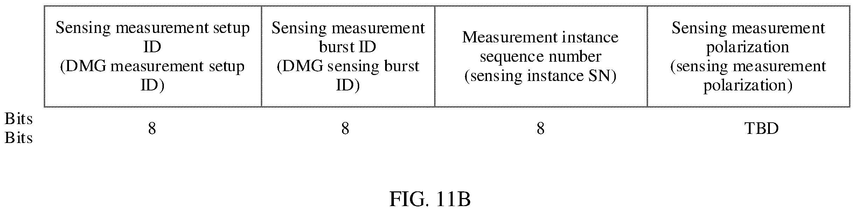

Optionally, the sensing transmitter or a sensing initiator may indicate, via a DMG sensing poll (DMG sensing poll) frame, the sensing receiver to report the sensing results in different polarization directions. For example, the sensing transmitter or the sensing initiator may indicate, via a TDD beamforming information (TDD beamforming information) field of the DMG sensing poll (DMG sensing poll) frame, the sensing receiver to report the sensing results in different polarization directions. For example, FIG. 11B shows a structure of a TDD beamforming information field of a DMG sensing poll (DMG sensing poll) frame. As shown in FIG. 11B, the sensing transmitter may add a field, for example, a measurement result polarization (sensing measurement polarization) field, to the TDD beamforming information field, to indicate a sensing result that the sensing transmitter expects.

For example, in the linear polarization scenario, when the field is 0 (or another reserved value), it may indicate the sensing receiver to report the sensing result. In this case, polarization measurement may not be performed on the sensing result. When the field is 1, it may indicate the sensing receiver to report all polarization sensing results, for example, H-H, H-V, V-V, and V-H. When the field is 2, it may indicate the sensing receiver to report a cross-polarization sensing result, for example, H-V and/or V-H. When the field is 3, it may indicate the sensing receiver to report a co-polarization sensing result, for example, H-H and/or V-V. The field may further indicate the sensing receiver to report one or more polarization sensing results, for example, one or more of the following: H-H, H-V, V-V, and V-H.

For example, in the circular polarization scenario, when the field is 0 (or another reserved value), it may indicate the sensing receiver to report the sensing result. In this case, polarization measurement may not be performed on the sensing result. When the field is 1, it may indicate the sensing receiver to report all polarization sensing results (for example, LH-LH, LH-RH, RH-RH, and RH-LH). When the field is 2, it may indicate the sensing receiver to report a cross-polarization sensing result, for example, LH-RH and/or RH-LH. When the field is 3, it may indicate the sensing receiver to report a co-polarization sensing result, for example, LH-LH and/or RH-RH. The field may further indicate the sensing receiver to report one or more polarization sensing results, for example, one or more of the following: H-LH, LH-RH, RH-RH, and RH-LH.

It may be understood that a name (measurement result polarization) of the foregoing field is merely shown as an example, and is not intended to limit the field. The field may indicate a type of the sensing result sent by the sensing receiver.

The following describes a communication apparatus for implementing the foregoing method in embodiments of this application with reference to the accompanying drawings. Therefore, all the foregoing content may be used in the following embodiments. Repeated content is not described again.

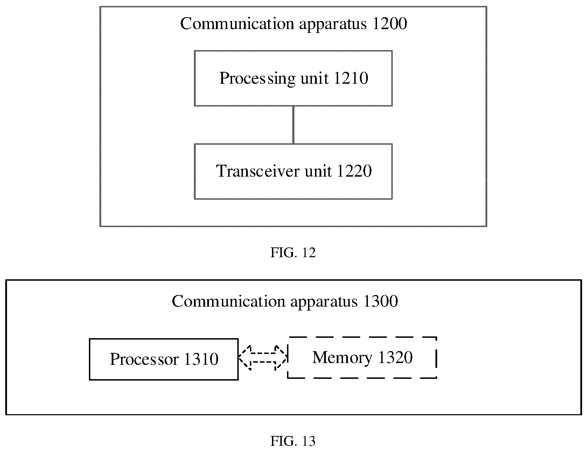

FIG. 12 is a block diagram of a communication apparatus 1200 according to an embodiment of this application. The communication apparatus 1200 may correspondingly implement functions or steps implemented by the first device or the second device in the foregoing method embodiments. The communication apparatus may include a processing unit 1210 and a transceiver unit 1220. Optionally, the communication apparatus may further include a storage unit. The storage unit may be configured to store instructions (code or a program) and/or data. The processing unit 1210 and the transceiver unit 1220 may be coupled to the storage unit. For example, the processing unit 1210 may read the instructions (the code or the program) and/or the data in the storage unit, to implement a corresponding method. The foregoing units may be disposed independently, or may be partially or completely integrated.

In some possible implementations, the communication apparatus 1200 can correspondingly implement the behavior and functions of the first device in the foregoing method embodiments. For example, the communication apparatus 1200 may be the first device, or may be a component (for example, a chip or a circuit) used in the first device. The transceiver unit 1220 may be configured to perform all receiving or sending operations performed by the first device in embodiments shown in FIG. 2 and FIG. 6 to FIG. 10, for example, S201 and S202 in the embodiment shown in FIG. 2; and/or configured to support another process of the technology described in this specification. The processing unit 1210 is configured to perform all operations performed by the first device in embodiments shown in FIG. 2 and FIG. 6 to FIG. 10 other than receiving and sending operations, and/or configured to support another process of the technology described in this specification.

For example, the processing unit 1210 is configured to generate first information. The transceiver unit 1220 is configured to send the first information to the second device. The first information indicates a first polarization direction and a second polarization direction. The first polarization direction is different from the second polarization direction. The transceiver unit 1220 is further configured to send a PPDU to the second device, where the PPDU is used for sensing measurement. The first polarization direction is a polarization direction of a first field of the PPDU, and the second polarization direction is a polarization direction of a second field of the PPDU.

For another example, the transceiver unit 1220 is configured to receive first information from the second device. The first information indicates a first polarization direction and a second polarization direction. The first polarization direction is different from the second polarization direction. The processing unit 1210 is configured to generate a PPDU based on the first information. The transceiver unit 1220 is further configured to send a PPDU to the second device, where the PPDU is used for sensing measurement. The first polarization direction is a polarization direction of a first field of the PPDU, and the second polarization direction is a polarization direction of a second field of the PPDU.

For another example, the processing unit 1210 is configured to generate a PPDU. The transceiver unit 1220 is further configured to send the PPDU to the second device, where the PPDU is used for sensing measurement. A first polarization direction is a polarization direction in which the first device sends a first field of the PPDU, and a second polarization direction is a polarization direction in which the first device sends a second field of the PPDU. The first polarization direction is different from the second polarization direction, and the first polarization direction and the second polarization direction are pre-defined or pre-configured.

For another example, the processing unit 1210 is configured to generate a PPDU. The transceiver unit 1220 is configured to send the PPDU, where the PPDU is used for sensing measurement. Polarization directions of a 1^{st} field to an (N/4)^{th} field of the PPDU are a first polarization direction, polarization directions of an (N/4+1)^{th} field to an (N/2)^{th} field of the PPDU are a second polarization direction, polarization directions of an (N/2+1)^{th} field to a (3N/4)^{th} field of the PPDU are the first polarization direction, and polarization directions of a (3N/4+1)^{th} field to an N^{th} field of the PPDU are the second polarization direction, where N is an integer greater than or equal to 2. Alternatively, a polarization direction of an n^{th} field of the PPDU is a first polarization direction, and a polarization direction of an (n+1)^{th} field of the PPDU is a second polarization direction, where n is greater than or equal to 1 and less than or equal to N, and N is an integer greater than or equal to 2. The first polarization direction is different from the second polarization direction.

For another example, the processing unit 1210 is configured to generate a PPDU. The transceiver unit 1220 is configured to send the PPDU, where the PPDU is used for sensing measurement. Polarization directions of a 1^{st} field to an L^{th} field of the PPDU are a first polarization direction, and polarization directions of an (L+1)^{th} field to a (2L)^{th} field of the PPDU are a second polarization direction, where L is an integer greater than or equal to 2. The first polarization direction is different from the second polarization direction.

In some possible implementations, the communication apparatus 1200 can correspondingly implement the behavior and functions of the second device in the foregoing method embodiments. For example, the communication apparatus 1200 may be the second device, or may be a component (for example, a chip or a circuit) used in the second device. The transceiver unit 1220 may be configured to perform all receiving or sending operations performed by the second device in embodiments shown in FIG. 2 and FIG. 6 to FIG. 10, for example, S601 and S602 in the embodiment shown in FIG. 6; and/or configured to support another process of the technology described in this specification. The processing unit 1210 is configured to perform all operations performed by the second device other than receiving and sending operations, and/or configured to support another process of the technology described in this specification.

For example, the transceiver unit 1220 is configured to receive first information from the first device. The first information indicates a first polarization direction and a second polarization direction. The first polarization direction is different from the second polarization direction. The processing unit 1210 is configured to determine the first polarization direction and the second polarization direction. The transceiver unit 1220 is further configured to receive a PPDU from the first device, where the PPDU is used for sensing measurement. The first polarization direction is a polarization direction of a first field of the PPDU, and the second polarization direction is a polarization direction of a second field of the PPDU.

For another example, the processing unit 1210 is configured to generate first information. The transceiver unit 1220 is configured to send the first information to the first device, where the first information indicates a first polarization direction and a second polarization direction. The first polarization direction is different from the second polarization direction. The transceiver unit 1220 is further configured to receive a PPDU from the first device, where the PPDU is used for sensing measurement. The first polarization direction is a polarization direction of a first field of the PPDU, and the second polarization direction is a polarization direction of a second field of the PPDU.

For another example, the processing unit 1210 is configured to determine a third polarization direction and a fourth polarization direction. The transceiver unit 1220 is configured to receive a PPDU from the first device in the third polarization direction, where the PPDU is used for sensing measurement. The third polarization direction is a polarization direction in which the second device receives a first field of the PPDU, and the fourth polarization direction is a polarization direction in which the second device receives a second field of the PPDU. The third polarization direction is different from the fourth polarization direction, and the third polarization direction and the fourth polarization direction are pre-defined or pre-configured.

For another example, the processing unit 1210 is configured to determine a third polarization direction and a fourth polarization direction. The transceiver unit 1220 is configured to receive a PPDU, where the PPDU is used for sensing measurement. Polarization directions of a 1^{st} field to an (N/4)^{th} field of the PPDU are the third polarization direction, polarization directions of an (N/4+1)^{th} field to an (N/2)^{th} field are the fourth polarization direction, polarization directions of an (N/2+1)^{th} field to a (3N/4)^{th} field of the PPDU are the third polarization direction, and polarization directions of a (3N/4+1)^{th} field to an N^{th} field of the PPDU are the fourth polarization direction, where N is an integer greater than or equal to 1. Alternatively, a polarization direction of an n^{th} field of the PPDU is a third polarization direction, and a polarization direction of an (n+1)^{th} field of the PPDU is a fourth polarization direction, where n is greater than or equal to 1 and less than or equal to N, and N is an integer greater than or equal to 1. The third polarization direction is different from the fourth polarization direction.

For another example, the processing unit 1210 is configured to determine a third polarization direction and a fourth polarization direction. The transceiver unit 1220 is configured to receive a PPDU, where the PPDU is used for sensing measurement. Polarization directions of a 1^{st} field to an L^{th} field of the PPDU are the third polarization direction, and polarization directions of an (L+1)^{th} field to a (2L)^{th} field are the fourth polarization direction, where L is an integer greater than or equal to 1. The third polarization direction is different from the fourth polarization direction.

For operations performed by the processing unit 1210 and the transceiver unit 1220, refer to the related descriptions in the foregoing method embodiments.

It should be understood that the processing unit 1210 in this embodiment of this application may be implemented by a processor or a processor-related circuit component, and the transceiver unit 1220 may be implemented by a transceiver, a transceiver-related circuit component, or a communication interface.

Based on a same conception, as shown in FIG. 13, an embodiment of this application provides a communication apparatus 1300. The communication apparatus 1300 includes a processor 1310. Optionally, the communication apparatus 1300 may further include a memory 1320, configured to store instructions executed by the processor 1310, store input data required by the processor 1310 to run the instructions, or store data generated after the processor 1310 runs the instructions. The processor 1310 may implement, by using the instructions stored in the memory 1320, the method shown in the foregoing method embodiments.

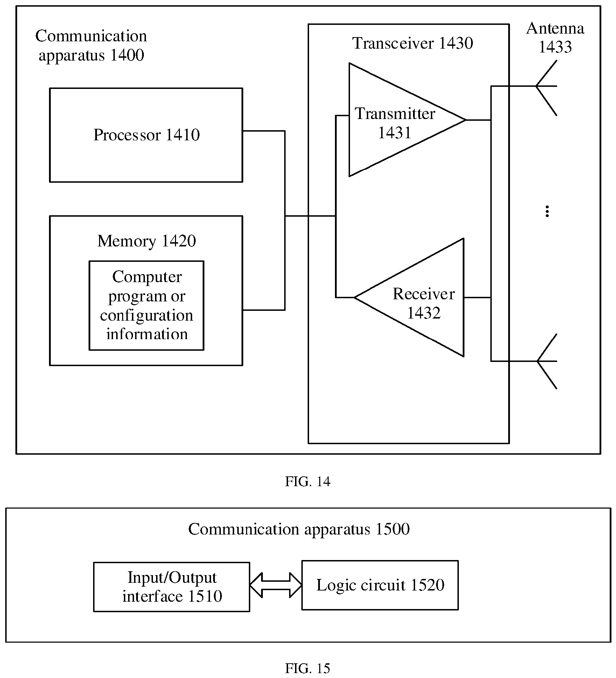

Based on a same concept, as shown in FIG. 14, an embodiment of this application provides a communication apparatus 1400. The communication apparatus 1400 may be a chip or a chip system. Optionally, in this embodiment of this application, the chip system may include a chip, or may include a chip and another discrete component.

The communication apparatus 1400 may include at least one processor 1410. The processor 1410 is coupled to a memory. Optionally, the memory may be located inside the apparatus, or may be located outside the apparatus. For example, the communication apparatus 1400 may further include at least one memory 1420. The memory 1420 stores a necessary computer program, configuration information, a computer program or instructions, and/or data for implementing any one of the foregoing embodiments. The processor 1410 may execute the computer program stored in the memory 1420, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 1410 may cooperate with the memory 1420. A specific connection medium between the transceiver 1430, the processor 1410, and the memory 1420 is not limited in this embodiment of this application.

The communication apparatus 1400 may further include the transceiver 1430, and the communication apparatus 1400 may exchange information with another device by using the transceiver 1430. The transceiver 1430 may be a circuit, a bus, a transceiver, or any other apparatus that can be configured to exchange information, or is referred to as a signal transceiver unit. As shown in FIG. 14, the transceiver 1430 includes a transmitter 1431, a receiver 1432, and an antenna 1433. In addition, when the communication apparatus 1400 is a chip type apparatus or circuit, the transceiver in the communication apparatus 1400 may alternatively be an input/output circuit and/or a communication interface, and may input data (or is referred to as receiving data) and output data (or is referred to as sending data). The processor is an integrated processor, a microprocessor, or an integrated circuit, and the processor may determine output data based on input data.

In a possible implementation, the communication apparatus 1400 may be used in a first device. Specifically, the communication apparatus 1400 may be the first device, or may be an apparatus that can support the first device in implementing the function of the first device in any one of the foregoing embodiments. The memory 1420 stores a necessary computer program, a computer program or instructions, and/or data for implementing functions of the first device in any one of the foregoing embodiments. The processor 1410 may execute the computer program stored in the memory 1420, to complete the method performed by the first device in any one of the foregoing embodiments.

In another possible implementation, the communication apparatus 1400 may be used in a second device. Specifically, the communication apparatus 1400 may be the terminal device, or may be an apparatus that can support the second device in implementing the function of the second device in any one of the foregoing embodiments. The memory 1420 stores a necessary computer program, a computer program or instructions, and/or data for implementing functions of the second device in any one of the foregoing embodiments. The processor 1410 may execute the computer program stored in the memory 1420, to complete the method performed by the second device in any one of the foregoing embodiments.

The communication apparatus 1400 provided in this embodiment may be used in a first device to complete the method performed by the first device, or may be used in a second device to complete the method performed by the second device. Therefore, for technical effect that can be achieved by this embodiment, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 15. Based on the foregoing embodiments, an embodiment of this application further provides another communication apparatus 1500, including an input/output interface 1510 and a logic circuit 1520. The input/output interface 1510 is configured to receive code instructions and transmit the code instructions to the logic circuit 1520. The logic circuit 1520 is configured to execute the code instructions to perform the method performed by the first device or the method performed by the second device in any one of the foregoing embodiments.

The following describes in detail an operation performed by the communication apparatus used in the first device or the second device.

In an optional implementation, the communication apparatus 1500 may be used in the first device, to perform the method performed by the first device. For example, the method may specifically be the method performed by the first device in embodiments shown in FIG. 2 and FIG. 6 to FIG. 10.

For example, the logic circuit 1520 is configured to generate first information. The input/output interface 1510 is configured to output the first information to the second device. The first information indicates a first polarization direction and a second polarization direction. The first polarization direction is different from the second polarization direction. The input/output interface 1510 is further configured to output a PPDU to the second device, where the PPDU is used for sensing measurement. The first polarization direction is a polarization direction of a first field of the PPDU, and the second polarization direction is a polarization direction of a second field of the PPDU.

For another example, the input/output interface 1510 is configured to input first information from the second device. The first information indicates a first polarization direction and a second polarization direction. The first polarization direction is different from the second polarization direction. The logic circuit 1520 is configured to generate a PPDU based on the first information. The input/output interface 1510 is further configured to output the PPDU to the second device, where the PPDU is used for sensing measurement. The first polarization direction is a polarization direction of a first field of the PPDU, and the second polarization direction is a polarization direction of a second field of the PPDU.

For another example, the logic circuit 1520 is configured to generate a PPDU. The input/output interface 1510 is configured to output the PPDU to the second device, where the PPDU is used for sensing measurement. A first polarization direction is a polarization direction in which the first device outputs a first field of the PPDU, and a second polarization direction is a polarization direction in which the first device outputs a second field of the PPDU. The first polarization direction is different from the second polarization direction, and the first polarization direction and the second polarization direction are pre-defined or pre-configured.

For another example, the logic circuit 1520 is configured to generate a PPDU. The input/output interface 1510 is configured to output the PPDU, where the PPDU is used for sensing measurement. Polarization directions of a 1^{st} field to an (N/4)^{th} field of the PPDU are a first polarization direction, polarization directions of an (N/4+1)^{th} field to an (N/2)^{th} field of the PPDU are a second polarization direction, polarization directions of an (N/2+1)^{th} field to a (3N/4)^{th} field of the PPDU are the first polarization direction, and polarization directions of a (3N/4+1)^{th} field to an N^{th} field of the PPDU are the second polarization direction, where N is an integer greater than or equal to 2. Alternatively, a polarization direction of an n^{th} field of the PPDU is a first polarization direction, and a polarization direction of an (n+1)^{th} field of the PPDU is a second polarization direction, where n is greater than or equal to 1 and less than or equal to N, and N is an integer greater than or equal to 2. The first polarization direction is different from the second polarization direction.

In another optional implementation, the communication apparatus 1500 may be used in the second device, to perform the method performed by the second device. For example, the method may specifically be the method performed by the second device in the method embodiments shown in FIG. 2 and FIG. 6 to FIG. 10.

For example, the input/output interface 1510 is configured to input first information from the first device. The first information indicates a first polarization direction and a second polarization direction. The first polarization direction is different from the second polarization direction. The logic circuit 1520 is configured to determine the first polarization direction and the second polarization direction. The input/output interface 1510 is further configured to input a PPDU from the first device, where the PPDU is used for sensing measurement. The first polarization direction is a polarization direction of a first field of the PPDU, and the second polarization direction is a polarization direction of a second field of the PPDU.

For another example, the logic circuit 1520 is configured to generate first information. The input/output interface 1510 is configured to output the first information to the first device, where the first information indicates a first polarization direction and a second polarization direction. The first polarization direction is different from the second polarization direction. The input/output interface 1510 is further configured to input a PPDU from the first device, where the PPDU is used for sensing measurement. The first polarization direction is a polarization direction of a first field of the PPDU, and the second polarization direction is a polarization direction of a second field of the PPDU.

For another example, the logic circuit 1520 is configured to determine a third polarization direction and a fourth polarization direction. The input/output interface 1510 is configured to input a PPDU from the first device in the third polarization direction, where the PPDU is used for sensing measurement. The third polarization direction is a polarization direction in which the second device inputs a first field of the PPDU, and the fourth polarization direction is a polarization direction in which the second device inputs a second field of the PPDU. The third polarization direction is different from the fourth polarization direction, and the third polarization direction and the fourth polarization direction are pre-defined or pre-configured.

For another example, the logic circuit 1520 is configured to determine a third polarization direction and a fourth polarization direction. The input/output interface 1510 is configured to input a PPDU, where the PPDU is used for sensing measurement. Polarization directions of a 1^{st} field to an (N/4)^{th} field of the PPDU are the third polarization direction, polarization directions of an (N/4+1)^{th} field to an (N/2)^{th} field are the fourth polarization direction, polarization directions of an (N/2+1)^{th} field to a (3N/4)^{th} field of the PPDU are the third polarization direction, and polarization directions of a (3N/4+1)^{th} field to an N^{th} field of the PPDU are the fourth polarization direction, where N is an integer greater than or equal to 1. Alternatively, a polarization direction of an n^{th} field of the PPDU is a third polarization direction, and a polarization direction of an (n+1)^{th} field of the PPDU is a fourth polarization direction, where n is greater than or equal to 1 and less than or equal to N, and N is an integer greater than or equal to 1. The third polarization direction is different from the fourth polarization direction.

The communication apparatus 1500 provided in this embodiment may be used in the second device to perform the method performed by the second device, or may be used in the second device to complete the method performed by the second device. Therefore, for technical effect that can be achieved by this embodiment, refer to the foregoing method embodiments. Details are not described herein again.

Based on the foregoing embodiments, an embodiment of this application further provides a communication system. The communication system includes at least one communication apparatus used in a first device and at least one communication apparatus used in a second device. For technical effect that can be achieved by this embodiment, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the first device or the method performed by the second device in any one of the foregoing embodiments is implemented. The computer-readable storage medium may include any medium that can store program code, for example, a USB flash drive, a removable hard disk drive, a read-only memory, a random access memory, a magnetic disk, or an optical disc.

To implement the functions of the communication apparatus in FIG. 12 to FIG. 15, an embodiment of this application further provides a chip, including a processor, configured to support the communication apparatus in implementing the functions of the first device or the second device in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that a computer program or instructions may be used to implement each procedure and/or each block in the flowcharts and/or the block diagrams and a combination of a procedure and/or a block in the flowcharts and/or the block diagrams. The computer program or the instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or the instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or the instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to embodiments of this application without departing from the scope of embodiments of this application. This application is intended to cover these modifications and variations in embodiments of this application provided that they fall within the scope of protection defined by the following claims and their equivalent technologies.

## Claims

1. An information transmission method, comprising:
sending, by a first device, first information to a second device, wherein the first information indicates a first polarization direction and a second polarization direction, and the first polarization direction is different from the second polarization direction; and
sending, by the first device, a physical layer protocol data unit PPDU to the second device, wherein the PPDU is used for sensing measurement, wherein
the first polarization direction is a polarization direction of a first field of the PPDU, and the second polarization direction is a polarization direction of a second field of the PPDU.

2. An information transmission method, comprising:
receiving, by a first device, first information from a second device, wherein the first information indicates a first polarization direction and a second polarization direction, and the first polarization direction is different from the second polarization direction; and
sending, by the first device, a physical layer protocol data unit PPDU to the second device, wherein the PPDU is used for sensing measurement, wherein
the first polarization direction is a polarization direction of a first field of the PPDU, and the second polarization direction is a polarization direction of a second field of the PPDU.

3. The method according to claim 1 or 2, wherein the first polarization direction is used by the second device to receive the first field, and the second polarization direction is used by the second device to receive the second field.

4. The method according to claim 1 or 2, wherein the sending, by the first device, the PPDU to the second device comprises:
sending, by the first device, the first field to the second device in the first polarization direction; and
sending, by the first device, the second field to the second device in the second polarization direction.

5. The method according to any one of claims 1 to 4, wherein the first information is carried in at least one of the following: a sensing measurement setup request, a sensing measurement setup response, an instance request, and an instance response.

6. The method according to any one of claims 1 to 4, wherein the first information is carried in header information of the PPDU.

7. The method according to any one of claims 1 to 6, wherein the first polarization direction comprises horizontal polarization in a linear polarization manner, and the second polarization direction comprises vertical polarization in the linear polarization direction; or
the first polarization direction comprises vertical polarization in a linear polarization manner, and the second polarization direction comprises horizontal polarization in the linear polarization direction; or
the first polarization direction comprises left-hand polarization in a circular polarization manner, and the second polarization direction comprises right-hand polarization in the circular polarization manner; or
the first polarization direction comprises right-hand polarization in a circular polarization manner, and the second polarization direction comprises left-hand polarization in the circular polarization manner.

8. The method according to any one of claims 1 to 7, further comprising:
receiving, by the first device, sensing result information from the second device, wherein the sensing result information comprises second indication information and a sensing result, and the second indication information indicates a polarization manner of the sensing result.

9. The method according to claim 8, wherein the second indication information is carried in a DMG sensing report element or a DMG sensing report frame.

10. An information transmission method, comprising:
receiving, by a second device, first information from a first device, wherein the first information indicates a first polarization direction and a second polarization direction, and the first polarization direction is different from the second polarization direction; and
receiving, by the second device, a physical layer protocol data unit PPDU from the first device, wherein the PPDU is used for sensing measurement, wherein
the first polarization direction is a polarization direction of a first field of the PPDU, and the second polarization direction is a polarization direction of a second field of the PPDU.

11. An information transmission method, comprising:
sending, by a second device, first information to a first device, wherein the first information indicates a first polarization direction and a second polarization direction, and the first polarization direction is different from the second polarization direction; and
receiving, by the second device, a physical layer protocol data unit PPDU from the first device, wherein the PPDU is used for sensing measurement, wherein
the first polarization direction is a polarization direction of a first field of the PPDU, and the second polarization direction is a polarization direction of a second field of the PPDU.

12. The method according to claim 10 or 11, wherein the receiving, by the second device, a physical layer protocol data unit PPDU from the first device comprises:
receiving, by the second device, a first field from the first device in the first polarization direction; and
receiving, by the second device, a second field from the first device in the second polarization direction.

13. The method according to claim 10 or 11, wherein the first polarization direction is used by the first device to send the first field, and the second polarization direction is used by the first device to send the second field; and
the receiving, by the second device, a physical layer protocol data unit PPDU from the first device comprises:
receiving, by the second device, the first field in a third polarization direction; and
receiving, by the second device, the second field in a fourth polarization direction, wherein
the first polarization direction is the same as the third polarization direction, and the second polarization direction is different from the fourth polarization direction; or the first polarization direction is different from the third polarization direction, and the second polarization direction is the same as the fourth polarization direction.

14. The method according to any one of claims 10 to 13, wherein the first information is carried in at least one of the following: a sensing measurement setup request, a sensing measurement setup response, an instance request, and an instance response.

15. The method according to any one of claims 10 to 13, wherein the first information is carried in header information of the PPDU.

16. The method according to any one of claims 10 to 15, wherein the first polarization direction comprises horizontal polarization in a linear polarization manner, and the second polarization direction comprises vertical polarization in the linear polarization direction; or
the first polarization direction comprises vertical polarization in a linear polarization manner, and the second polarization direction comprises horizontal polarization in the linear polarization direction; or
the first polarization direction comprises left-hand polarization in a circular polarization manner, and the second polarization direction comprises right-hand polarization in the circular polarization manner; or
the first polarization direction comprises right-hand polarization in a circular polarization manner, and the second polarization direction comprises left-hand polarization in the circular polarization manner.

17. The method according to any one of claims 10 to 16, further comprising:
sending, by the second device, sensing result information to the first device, wherein the sensing result information comprises second indication information and a sensing result, and the second indication information indicates a polarization manner of the sensing result.

18. The method according to claim 17, wherein the second indication information is carried in a DMG sensing report element or a DMG sensing report frame.

19. An information transmission method, comprising:
sending, by a first device, a PPDU to a second device, wherein the PPDU is used for sensing measurement, wherein
a polarization direction in which the first device sends a first field of the PPDU is a first polarization direction, a polarization direction in which the first device sends a second field of the PPDU is a second polarization direction, the first polarization direction is different from the second polarization direction, and the first polarization direction and the second polarization direction are pre-defined or pre-configured.

20. An information transmission method, comprising:
sending, by a first device, a physical layer protocol data unit PPDU, wherein the PPDU is used for sensing measurement, wherein
polarization directions of a 1^{st} field to an (N/4)^{th} field of the PPDU are a first polarization direction, polarization directions of an (N/4+1)^{th} field to an (N/2)^{th} field of the PPDU are a second polarization direction, polarization directions of an (N/2+1)^{th} field to a (3N/4)^{th} field of the PPDU are the first polarization direction, and polarization directions of a (3N/4+1)^{th} field to an N^{th} field of the PPDU are the second polarization direction, wherein N is an integer greater than or equal to 2; or a polarization direction of an n^{th} field of the PPDU is a first polarization direction, and a polarization direction of an (n+1)^{th} field of the PPDU is a second polarization direction, wherein n is greater than or equal to 1 and less than or equal to N, and N is an integer greater than or equal to 2; and
the first polarization direction is different from the second polarization direction.

21. An information transmission method, comprising:
sending, by a first device, a physical layer protocol data unit PPDU to a second device, wherein the PPDU is used for sensing measurement, wherein
polarization directions of a 1^{st} field to an L^{th} field of the PPDU are a first polarization direction, and polarization directions of an (L+1)^{th} field to a (2L)^{th} field of the PPDU are a second polarization direction, wherein L is an integer greater than or equal to 1; and
the first polarization direction is different from the second polarization direction.

22. The method according to any one of claims 19 to 21, wherein the first polarization direction comprises horizontal polarization in a linear polarization manner, and the second polarization direction comprises vertical polarization in the linear polarization direction; or
the first polarization direction comprises vertical polarization in a linear polarization manner, and the second polarization direction comprises horizontal polarization in the linear polarization direction; or
the first polarization direction comprises left-hand polarization in a circular polarization manner, and the second polarization direction comprises right-hand polarization in the circular polarization manner; or
the first polarization direction comprises right-hand polarization in a circular polarization manner, and the second polarization direction comprises left-hand polarization in the circular polarization manner.

23. The method according to any one of claims 19 to 22, wherein the first device receives sensing result information from the second device, wherein the sensing result information comprises second indication information and a sensing result, and the second indication information indicates a polarization manner of the sensing result.

24. The method according to claim 23, wherein the second indication information is carried in a DMG sensing report element or a DMG sensing report frame.

25. An information transmission method, comprising:
receiving, by a second device, a physical layer protocol data unit PPDU from a first device in a third polarization direction, wherein the PPDU is used for sensing measurement, wherein
a polarization direction in which the second device receives a first field of the PPDU is a third polarization direction, a polarization direction in which the second device receives a second field of the PPDU is a fourth polarization direction, the third polarization direction is different from the fourth polarization direction, and the third polarization direction and the fourth polarization direction are pre-defined or pre-configured.

26. An information transmission method, comprising:
receiving, by a second device, a physical layer protocol data unit PPDU, wherein the PPDU is used for sensing measurement, wherein
polarization directions of a 1^{st} field to an (N/4)^{th} field of the PPDU are a third polarization direction, polarization directions of an (N/4+1)^{th} field to an (N/2)^{th} field are a fourth polarization direction, polarization directions of an (N/2+1)^{th} field to a (3N/4)^{th} field of the PPDU are the third polarization direction, and polarization directions of a (3N/4+1)^{th} field to an N^{th} field of the PPDU are the fourth polarization direction, wherein N is an integer greater than or equal to 2; or a polarization direction of an n^{th} field of the PPDU is a third polarization direction, and a polarization direction of an (n+1)^{th} field of the PPDU is a fourth polarization direction, wherein n is greater than or equal to 1 and less than or equal to N, and N is an integer greater than or equal to 2; and
the third polarization direction is different from the fourth polarization direction.

27. An information transmission method, comprising:
receiving, by a second device, a physical layer protocol data unit PPDU, wherein the PPDU is used for sensing measurement, wherein
polarization directions of a 1^{st} field to an L^{th} field of the PPDU are a third polarization direction, and polarization directions of an (L+1)^{th} field to a (2L)^{th} field of the PPDU are a fourth polarization direction, wherein L is an integer greater than or equal to 1; and
the third polarization direction is different from the fourth polarization direction.

28. The method according to any one of claims 25 to 27, wherein the third polarization direction comprises horizontal polarization in a linear polarization manner, and the fourth polarization direction comprises vertical polarization in the linear polarization direction; or
the third polarization direction comprises vertical polarization in a linear polarization manner, and the fourth polarization direction comprises horizontal polarization in the linear polarization direction; or
the third polarization direction comprises left-hand polarization in a circular polarization manner, and the fourth polarization direction comprises right-hand polarization in the circular polarization manner; or
the third polarization direction comprises right-hand polarization in a circular polarization manner, and the fourth polarization direction comprises left-hand polarization in the circular polarization manner.

29. The method according to any one of claims 25 to 28, further comprising:
sending, by the second device, sensing result information to the first device, wherein the sensing result information comprises second indication information and a sensing result, and the second indication information indicates a polarization manner of the sensing result.

30. The method according to claim 29, wherein the second indication information is carried in a DMG sensing report element or a DMG sensing report frame.

31. An information transmission method, comprising:
sending, by a first device, a directional multi-gigabit DMG sensing beam descriptor element to a second device, wherein the sensing beam descriptor element comprises a beam descriptor field, and the beam descriptor field indicates a beam polarization direction; and
sending, by the first device, a physical layer protocol data unit PPDU to the second device in the beam polarization direction, wherein the PPDU is used for sensing measurement.

32. The method according to claim 31, wherein the beam descriptor field comprises one or more of the following:
a horizontal polarization HP subfield, wherein the HP subfield indicates that a polarization direction of a beam is horizontal polarization;
a vertical polarization VP subfield, wherein the VP subfield indicates that a polarization direction of a beam is vertical polarization;
a left-hand circular polarization LHCP subfield, wherein the LHCP subfield indicates that a polarization direction of a beam is left-hand circular polarization; or
a right-hand circular polarization RHCP subfield, wherein the RHCP subfield indicates that a polarization direction of a beam is right-hand circular polarization.

33. The method according to claim 31, wherein the sensing beam descriptor element comprises a first beam descriptor field and a second beam descriptor field, the first beam descriptor field indicates a first beam polarization direction, and the second beam descriptor field indicates a second beam polarization direction; and
the sending, by the first device, the PPDU to the second device in the beam polarization direction comprises:
sending, by the first device, a first field of the PPDU to the second device in the first polarization direction; and
sending, by the first device, a second field of the PPDU to the second device in the second polarization direction.

34. The method according to claim 33, wherein the first polarization direction is either horizontal polarization in a linear polarization manner or vertical polarization in the linear polarization manner, and the second polarization direction is either horizontal polarization in the linear polarization manner or vertical polarization in the linear polarization manner.

35. The method according to claim 33, wherein the first polarization direction is either left-hand polarization in a circular polarization manner or right-hand polarization in the circular polarization manner, and the second polarization direction is either left-hand polarization in the circular polarization manner or right-hand polarization in the circular polarization manner.

36. The method according to any one of claims 31 to 35, further comprising:
sending, by the first device, capability information of the first device to the second device, wherein the capability information comprises a polarization direction supported by the first device.

37. The method according to claim 36, wherein the capability information is carried in a DMG sensing capabilities element.

38. The method according to any one of claims 31 to 37, further comprising:
receiving, by the first device, sensing result information from the second device, wherein the sensing result information comprises indication information and a sensing result, and the indication information indicates a polarization manner of the sensing result.

39. The method according to claim 38, wherein in linear polarization, the indication information indicates that the polarization manner of the sensing result is one of the following:
when a value of the indication information is 1, the indication information indicates that a polarization direction of the sensing result is horizontal polarization-horizontal polarization H-H;
when the value of the indication information is 2, the indication information indicates that the polarization direction of the sensing result is horizontal polarization-vertical polarization H-V;
when the value of the indication information is 3, the indication information indicates that the polarization direction of the sensing result is vertical polarization-vertical polarization V-V; and
when the value of the indication information is 4, the indication information indicates that the polarization direction of the sensing result is vertical polarization-horizontal polarization V-H.

40. The method according to claim 38, wherein in circular polarization, the indication information indicates that the polarization manner of the sensing result is one of the following:
when a value of the indication information is 1, the indication information indicates that a polarization direction of the sensing result is left-hand circular polarization-left-hand circular polarization LH-LH;
when the value of the indication information is 2, the indication information indicates that the polarization direction of the sensing result is left-hand circular polarization-right-hand circular polarization LH-RH;
when the value of the indication information is 3, the indication information indicates that the polarization direction of the sensing result is right-hand circular polarization-right-hand circular polarization RH-RH; and
when the value of the indication information is 4, the indication information indicates that the polarization direction of the sensing result is right-hand circular polarization-left-hand circular polarization RH-LH.

41. The method according to any one of claims 38 to 40, wherein the indication information is carried in a DMG sensing report element.

42. An information transmission method, comprising:
receiving, by a second device, a directional multi-gigabit DMG sensing beam descriptor element from a first device, wherein the sensing beam descriptor element comprises a beam descriptor field, and the beam descriptor field indicates a beam polarization direction; and
receiving, by the second device, a physical layer protocol data unit PPDU from the first device, wherein the PPDU is used for sensing measurement, wherein
the beam polarization direction is a polarization direction in which the first device sends the PPDU.

43. The method according to claim 42, wherein the beam descriptor field comprises one or more of the following:
a horizontal polarization HP subfield, wherein the HP subfield indicates that a polarization direction of a beam is horizontal polarization;
a vertical polarization VP subfield, wherein the VP subfield indicates that a polarization direction of a beam is vertical polarization;
a left-hand circular polarization LHCP subfield, wherein the LHCP subfield indicates that a polarization direction of a beam is left-hand circular polarization; and
a right-hand circular polarization RHCP subfield, wherein the RHCP subfield indicates that a polarization direction of a beam is right-hand circular polarization.

44. The method according to claim 42, wherein the sensing beam descriptor element comprises a first beam descriptor field and a second beam descriptor field, the first beam descriptor field indicates a first beam polarization direction, and the second beam descriptor field indicates a second beam polarization direction; and
the first polarization direction is a polarization direction in which the first device sends a first field of the PPDU, and the second polarization direction is a polarization direction in which the first device sends a second field of the PPDU.

45. The method according to claim 44, wherein the first polarization direction is either horizontal polarization in a linear polarization manner or vertical polarization in the linear polarization manner, and the second polarization direction is either horizontal polarization in the linear polarization manner or vertical polarization in the linear polarization manner.

46. The method according to claim 44, wherein the first polarization direction is either left-hand polarization in a circular polarization manner or right-hand polarization in the circular polarization manner, and the second polarization direction is either left-hand polarization in the circular polarization manner or right-hand polarization in the circular polarization manner.

47. The method according to any one of claims 42 to 46, further comprising:
sending, by the second device, capability information of the second device to the first device, wherein the capability information comprises a polarization direction supported by the first device.

48. The method according to claim 47, wherein the capability information is carried in a DMG sensing capabilities element.

49. The method according to any one of claims 42 to 48, further comprising:
sending, by the second device, sensing result information to the first device, wherein the sensing result information comprises indication information and a sensing result, and the indication information indicates a polarization manner of the sensing result.

50. The method according to claim 49, wherein in linear polarization, the indication information indicates that the polarization manner of the sensing result is one of the following:
when a value of the indication information is 1, the indication information indicates that a polarization direction of the sensing result is horizontal polarization-horizontal polarization H-H;
when the value of the indication information is 2, the indication information indicates that the polarization direction of the sensing result is horizontal polarization-vertical polarization H-V;
when the value of the indication information is 3, the indication information indicates that the polarization direction of the sensing result is vertical polarization-vertical polarization V-V; and
when the value of the indication information is 4, the indication information indicates that the polarization direction of the sensing result is vertical polarization-horizontal polarization V-H.

51. The method according to claim 49, wherein in circular polarization, the indication information indicates that the polarization manner of the sensing result is one of the following:
when a value of the indication information is 1, the indication information indicates that a polarization direction of the sensing result is left-hand circular polarization-left-hand circular polarization LH-LH;
when the value of the indication information is 2, the indication information indicates that the polarization direction of the sensing result is left-hand circular polarization-right-hand circular polarization LH-RH;
when the value of the indication information is 3, the indication information indicates that the polarization direction of the sensing result is right-hand circular polarization-right-hand circular polarization RH-RH; and
when the value of the indication information is 4, the indication information indicates that the polarization direction of the sensing result is right-hand circular polarization-left-hand circular polarization RH-LH.

52. The method according to any one of claims 49 to 51, wherein the indication information is carried in a DMG sensing report element.

53. A communication apparatus, comprising a unit configured to perform the method according to claim 1 and any one of claims 3 to 9, or a unit configured to perform the method according to any one of claims 2 to 9, or a unit configured to perform the method according to claim 10 and any one of claims 12 to 18, or a unit configured to perform the method according to any one of claims 11 to 18, or a unit configured to perform the method according to claim 19 and any one of claims 22 to 24, or a unit configured to perform the method according to claim 20 and any one of claims 22 to 24, or a unit configured to perform the method according to any one of claims 21 to 24, or a unit configured to perform the method according to claim 25 and any one of claims 28 to 30, or a unit configured to perform the method according to claim 26 and any one of claims 28 to 30, or a unit configured to perform the method according to any one of claims 27 to 30, or a unit configured to perform the method according to any one of claims 31 to 41, or a unit configured to perform the method according to any one of claims 42 to 52.

54. A communication apparatus, wherein the apparatus comprises a processor and a memory;
the memory is configured to store a computer program or instructions; and
the processor is configured to execute the computer program or the instructions in the memory, to enable the apparatus to perform the method according to claim 1 and any one of claims 3 to 9, or the method according to any one of claims 2 to 9, or the method according to claim 10 and any one of claims 12 to 18, or the method according to any one of claims 11 to 18, or the method according to claim 19 and any one of claims 22 to 24, or the method according to claim 20 and any one of claims 22 to 24, or the method according to any one of claims 21 to 24, or the method according to claim 25 and any one of claims 28 to 30, or the method according to claim 26 and any one of claims 28 to 30, or the method according to any one of claims 27 to 30, or the method according to any one of claims 31 to 41, or the method according to any one of claims 42 to 52.

55. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 52.

56. A computer program product, comprising computer-executable instructions, wherein when the computer-executable instructions are run on a computer, the computer is enabled to perform the method according to any one of claims 1 to 52.

57. A chip system, comprising:
a memory, configured to store a computer program or instructions; and
a processor, configured to execute the computer program or the instructions in the memory, to enable a communication apparatus comprising the chip system to perform the method according to any one of claims 1 to 52.
